# EUROPEAN PATENT APPLICATION

(11) **EP 4 691 796 A1**
(43) Date of publication of application: **11.02.2026**
(21) Application number: 24783989.7
(22) Date of filing: 28.02.2024
(51) Int. Cl.: B60B 27/04, B62M 11/16, B62M 11/18

(54) **MANUAL-AUTOMATIC INTEGRATED INTERNAL VARIABLE-SPEED HUB AND BICYCLE**

(30) Priority: 06.04.2023 CN 202310354474
(71) Applicant: Guangdong Lofandi Intelligent Technology Co., Ltd, Guangzhou, Guangdong 510700 (CN)
(72) Inventor: LI, Jichu, Guangzhou, Guangdong 510700 (CN); LIN, Jiehuang, Guangzhou, Guangdong 510700 (CN); HE, Xu, Guangzhou, Guangdong 510700 (CN)
(74) Representative: Ripamonti, Enrico
(86) International application number: PCT/CN2024/078979
(87) International publication number: WO 2024/207904

(57) **Abstract**

A manual-automatic integrated internal variable-speed hub, comprising a core axle (4), a transmission mechanism (5), a driving mechanism (6), a control mechanism (7), an input member (3) and an output member (1), the core axle (4) being fixed to a frame, and the driving mechanism (6), the control mechanism (7) and the transmission mechanism (5) being successively connected and all mounted on the core axle (4); the input member (3) is fixedly connected to the transmission mechanism (5) and is used for inputting a torque to the transmission mechanism (5); the output member (1) is connected to the transmission mechanism (5) and is used for outputting the torque to wheels; and the transmission mechanism (5) has at least one transmission ratio. The driving mechanism (6) drives in a manual and/or automatic manner the control mechanism (7) to rotate to a specific angle, so as to change the transmission relationship of components in the transmission mechanism (5), thus achieving changing of the transmission ratio of the transmission mechanism (5). The manual-automatic integrated internal variable-speed hub has a manual speed change mode and an automatic speed change mode; and, in the manual speed change mode, a rider can freely change the gear according to actual road conditions, thus improving riding flexibility, and in the automatic speed change mode, the gear can be automatically changed according to a program, thus improving riding comfort. The gear shifting mode is achieved by means of electric driving of the control mechanism, and compared with traditional pulling-cable gear shifting, the electric drive gear shifting mode is free of gear shifting resistance, thereby achieving more accurate gear shifting. Further disclosed is a bicycle comprising the manual-automatic integrated internal variable-speed hub.

## Description

The present application claims the priority to Chinese Patent Application No. 202310354474.5, titled "MANUAL-AUTOMATIC INTEGRATED INTERNAL VARIABLE-SPEED HUB AND BICYCLE", filed on April 6, 2023 with the China National Intellectual Property Administration, which is incorporated herein by reference in its entirety.

### FIELD

The present application relates to the technical field of internal transmissions and, in particular, to a manual-automatic integrated internal gear hub and a bicycle.

### BACKGROUND

A hub is one of the components of a bicycle. The hub is laced to the rim of the rear wheel of the bicycle via spokes and is primarily configured to support the bicycle.

The conventional external derailleur system for the bicycle mainly includes a front derailleur, front chainrings, a chain, a rear derailleur, and a cassette. A cyclist operates the front derailleur to shift the chain between front chainrings with different numbers of teeth, or operates the rear derailleur to shift the chain between different sprockets of gears of the cassette. In the conventional external derailleur system, the hub does not possess gear-shifting function, and the cassette is mounted externally on the hub, making it susceptible to interference from rain, dust, and grease stain, and thus requiring frequent maintenance.

With development of technology, a variety of internal gear hubs have gradually increased on the market. Due to their enclosed structure, the internal gear hubs are largely unaffected by external factors such as rain, dust, and grease stain, offering the advantages of low failure rates and maintenance-free. The internal gear hubs may be categorized into automatic and manual types. However, the automatic internal gear hubs exhibit a certain degree of lag in gear shifting, which may detract from the riding experience of the cyclist. The manual internal gear hubs typically employ a cable-pulling mechanism, resulting in poor shifting feel and inflexibility. So far, an internal gear hub that combines both manual and automatic shifting functions has yet to be developed.

Therefore, there is a need for improvement and development of the existing technology.

### SUMMARY

An object of the present application is to provide a manual-automatic integrated internal gear hub and a bicycle, which feature both manual and automatic gear-shifting modes with improved shifting feel, more precise gear changes, and free of manual maintenance during long-term operation.

To address the aforementioned technical issues, a manual-automatic integrated internal gear hub is provided according to the present application, which includes a spindle, a transmission mechanism, a driving mechanism, a manipulation mechanism, an input member, and an output member. The spindle is fixed to a bicycle frame. The driving mechanism, the manipulation mechanism, and the transmission mechanism are sequentially connected and all mounted on the spindle.

The input member is fixedly connected to the transmission mechanism and is used to input torque to the transmission mechanism.

The output member is connected to the transmission mechanism and is used to output torque to the bicycle wheel.

The transmission mechanism has at least one transmission ratio.

The driving mechanism is configured to rotate the manipulation mechanism to a predetermined angle manually and/or automatically, such as to change transmission relationships among components of the transmission mechanism and thus achieve a change in the transmission ratio of the transmission mechanism.

Further, the driving mechanism is electrically driven.

Further, a buffer structure is connected between the driving mechanism and the manipulation mechanism.

Further, the buffer structure includes a gear-shifting protective member and an elastic element, with an end of the elastic element being connected to the gear-shifting protective member and the other end of the elastic element being connected to the manipulation mechanism.

Further, the driving mechanism includes a driving device, an output gear, and a gear-shifting actuating gear. The output shaft of the driving device is connected to the output gear, which is meshed with the gear-shifting actuating gear. The gear-shifting actuating gear is connected to the manipulation mechanism.

Further, the driving mechanism is provided with a gear position feedback module.

Further, the gear position feedback module includes multiple first Hall elements arranged in a row. The first Hall elements sense the magnetic field strength of a magnet mounted in the first magnet mounting slot of the gear-shifting actuating gear of the driving mechanism to obtain pulse signals, thereby determining the gear position to which the driving device of the driving mechanism has rotated.

Further, the gear position feedback module includes multiple second Hall elements arranged in a row. The second Hall elements sense the magnetic field strength of a magnet mounted in the second magnet mounting slot of the gear-shifting protective member of the driving mechanism to obtain pulse signals, thereby determining the current gear position of the internal gear hub.

Further, the driving mechanism is provided with a rotational speed feedback module.

Further, the rotational speed feedback module includes a third Hall element. The third Hall element senses the magnetic field strength of a magnet mounted in the third magnet mounting slot of an end cover connected to the output member to obtain pulse signals, thereby calculating the rotational speed of the internal gear hub.

Further, the driving mechanism includes a control box and a sealing cover connected to the control box. The control box is configured to house a driving device and a circuit board. The circuit board is provided with a gear position feedback module, a rotational speed feedback module, and a controller. The driving device, the gear position feedback module, and the rotational speed feedback module are each electrically connected to the controller.

Further, the manipulation mechanism is provided with a pawl seat and a manipulation device. The pawl seat is provided on the spindle, and the pawl seat is hinged with a pawl. The manipulation device is provided with an open slot, which is used to control the expansion or retraction of the pawl to alter the transmission relationships among the components of the transmission mechanism.

Further, multiple open slots are provided.

Further, the open slot is provided between adjacent gear position angles.

Further, the open slot is provided with a control surface for controlling the expansion or retraction of the pawl.

Further, the control surface includes a first control surface and a second control surface. The first control surface is an arc surface used to control the retraction of the pawl, and the second control surface is an inclined surface used to control the expansion of the pawl.

Further, the manipulation mechanism and the transmission mechanism are connected by inserting one into the other.

Further, the manipulation mechanism is provided with a third connecting portion, and the driving mechanism is provided with a second connecting portion. The third connecting portion of the manipulation mechanism is connected to the second connecting portion of the transmission mechanism by inserting one into the other.

Further, the manipulation mechanism includes a first manipulation device, a second manipulation device, and a third manipulation device. The first manipulation device comprises a first end and a second end, which are connected by a connecting rod. The first manipulation device, the second manipulation device, and the third manipulation device are each provided on the connecting rod.

Further, the transmission mechanism is provided with at least two stages of planetary gear mechanisms and at least one clutch structure. The driving mechanism is configured to enable torque to be output to the output member selectively through the clutch structure after being shifted by the planetary gear mechanisms by changing the transmission relationships of the planetary gear mechanisms manually and/or automatically.

Further, two stages of the planetary gear mechanisms are provided, namely a first-stage planetary gear mechanism and a second-stage planetary gear mechanism, which are connected in series for transmission.

Further, the first-stage planetary gear mechanism includes a first sun gear, a second sun gear, a first double planetary gear, a first transmission member, and a second transmission member. The first double planetary gear is rotatably connected to the first transmission member. The second transmission member has first gear teeth. The first double planetary gear has seventh gear teeth and eighth gear teeth. The first sun gear has third gear teeth, and the second sun gear has fourth gear teeth. The third gear teeth of the first sun gear are externally meshed with the seventh gear teeth of the first double planetary gear. The fourth gear teeth of the second sun gear are externally meshed with the eighth gear teeth of the first double planetary gear. The first gear teeth of the second transmission member are internally meshed with the eighth gear teeth of the first double planetary gear.

Further, a first clutch structure is provided between the first transmission member and the second transmission member.

Further, the second-stage planetary gear mechanism includes a third sun gear, a fourth sun gear, a second double planetary gear, a second transmission member, and a third transmission member. The second double planetary gear is rotatably connected to the second transmission member. The third transmission member has second gear teeth. The second double planetary gear has ninth gear teeth and tenth gear teeth. The third sun gear has fifth gear teeth, and the fourth sun gear has sixth gear teeth. The fifth gear teeth of the third sun gear are externally meshed with the ninth gear teeth of the second double planetary gear. The sixth gear teeth of the fourth sun gear are externally meshed with the tenth gear teeth of the second double planetary gear. The second gear teeth of the third transmission member are internally meshed with the tenth gear teeth of the second double planetary gear.

Further, a second clutch structure is provided between the second transmission member and the third transmission member.

Further, a sleeve is further included, which is connected to the output member. A third clutch structure is provided between the sleeve and the third transmission member.

Further, the third clutch structure and the second clutch structure are located in the same plane perpendicular to the axis of the spindle.

Further, the outer circumferential surface of the sleeve is provided thereon with anti-slip slots.

A bicycle is further provided according to the present application, which includes the aforementioned manual-automatic integrated internal gear hub.

From the above, it can be seen that the manual-automatic integrated internal gear hub of the present application offers both manual and automatic shifting modes. In the manual shifting mode, riders can freely shift gears based on actual road conditions, enhancing riding flexibility. In the automatic shifting mode, gears are automatically changed based on a program, improving riding comfort. The shifting is achieved through an electrically driven manipulation mechanism. Compared with conventional cable-operated shifting, the electrically driven shifting method has no shifting resistance, provides a better feel, enables more precise gear changes, and requires no manual maintenance over long periods of operation.

Additional features and advantages of the present application will be described in the following description and will partly become evident from the description or through the implementation of the present application. The purpose and other advantages of the present application can be realized and obtained through the specification, the claims, and the structure specially pointed out in the drawings.

### BRIEF DESCRIPTION OF THE DRAWINGS

FIG. 1 is a schematic structural view of a bicycle equipped with a manual-automatic integrated internal gear hub according to the present application.
FIG. 2 is a perspective view showing an operational state of the manual-automatic integrated internal gear hub according to the present application.
FIG. 3 is a perspective view of the manual-automatic integrated internal gear hub according to the present application.
FIG. 4 is a front view of the manual-automatic integrated internal gear hub according to the present application.
FIG. 5 is a right-side view of the manual-automatic integrated internal gear hub according to the present application.
FIG. 6 is a sectional view taken along line A-A in FIG. 5.
FIG. 7 is a perspective view of a driving mechanism.
FIG. 8 is another perspective view of the driving mechanism.
FIG. 9 is an exploded view of the driving mechanism.
FIG. 10 is a partially enlarged view of area B in FIG. 9.
FIG. 11 is an exploded view of the driving mechanism viewing from another angle.
FIG. 12 is a perspective view of a gear-shifting actuating gear.
FIG. 13 is another perspective view of the gear-shifting actuating gear.
FIG. 14 is a perspective view of a gear-shifting protective member.
FIG. 15 is another perspective view of the gear-shifting protective member.
FIG. 16 is a perspective view of a manipulation mechanism.
FIG. 17 is a front view of the manipulation mechanism.
FIG. 18 is a perspective view of a manipulation device.
FIG. 19 is a front view of the manipulation device.
FIG. 20 is a sectional view taken along line C-C in FIG. 19.
FIG. 21 is a sectional view taken along line D-D in FIG. 19.
FIG. 22 is a sectional view taken along line E-E in FIG. 19.
FIG. 23 is a sectional view taken along line F-F in FIG. 19.
FIG. 24 is a perspective view of a second pawl seat.
FIG. 25 is another perspective view of the second pawl seat.
FIG. 26 is a perspective view of a third pawl.
FIG. 27 is another perspective view of the third pawl.
FIG. 28 is a schematic structural view of the third pawl in two states.
FIG. 29 is a schematic structural view showing interaction between the third pawl and a third sun gear.
FIG. 30 is a perspective view of a transmission mechanism.
FIG. 31 is an exploded view of the transmission mechanism.
FIG. 32 is a longitudinal sectional view of the transmission mechanism.
FIG. 33 is a partially enlarged view of area G in FIG. 32.
FIG. 34 is a partially enlarged view of area H in FIG. 32.
FIG. 35 is a perspective view of a first transmission member.
FIG. 36 is another perspective view of the first transmission member.
FIG. 37 is a perspective view of a second transmission member.
FIG. 38 is another perspective view of the second transmission member.
FIG. 39 is a perspective view of a third transmission member.
FIG. 40 is a schematic structural view of a first clutch structure.
FIG. 41 is a schematic structural view of the first clutch structure in two states.
FIG. 42 shows a power transmission path of a first gear of the manual-automatic integrated internal gear hub according to the present application.
FIG. 43 shows a power transmission path of a second gear of the manual-automatic integrated internal gear hub according to the present application.
FIG. 44 shows a power transmission path of a third gear of the manual-automatic integrated internal gear hub according to the present application.
FIG. 45 shows a power transmission path of a fourth gear of the manual-automatic integrated internal gear hub according to the present application.
FIG. 46 shows a power transmission path of a fifth gear of the manual-automatic integrated internal gear hub according to the present application.
FIG. 47 shows a power transmission path of a sixth gear of the manual-automatic integrated internal gear hub according to the present application.

Description of reference numerals:
1 output member; 2 end cover; 21 third magnet mounting slot; 3 input member; 4 spindle; 41 position-limiting surface; 5 transmission mechanism; 501 first transmission member; 5011 input member mounting slot; 5012 first mounting slot; 5013 first mounting hole; 5014 first clutch structure; 50141 cage; 50142 roller position-limiting slot; 50143 roller; 50144 working surface; 502 second transmission member; 5021 first gear tooth; 5022 second mounting slot; 5023 second mounting hole; 5024 second clutch structure; 503 third transmission member; 5031 second gear tooth; 5032 third clutch structure; 504 first sun gear; 5041 third gear tooth; 505 second sun gear; 5051 fourth gear tooth; 506 third sun gear; 5061 fifth gear tooth; 5062 locking slot; 507 fourth sun gear; 5071 sixth gear tooth; 508 first double planetary gear; 5081 seventh gear tooth; 5082 eighth gear tooth; 509 second double planetary gear; 5091 ninth gear tooth; 5092 tenth gear tooth; 510 sleeve; 511 first pin; 512 first gasket; 513 first sun gear retaining ring; 514 second sun gear retaining ring; 515 fourth sun gear retaining ring; 516 first pin retaining ring; 517 second gasket; 518 second pin retaining ring; 519 second pin; 6 driving mechanism; 61 control box; 611 driving device mounting slot; 612 circuit board mounting slot; 613 through hole; 614 wire passing hole; 615 first position-limiting slot; 62 sealing cover; 63 driving device; 64 circuit board; 641 controller; 642 first Hall element; 643 second Hall element; 644 third Hall element; 65 output gear; 66 gear-shifting actuating gear; 661 sector gear body; 662 first cylindrical protrusion; 663 third mounting hole; 664 first stopper; 665 first magnet mounting slot; 67 gear-shifting protective member; 671 annular body; 672 first connecting portion; 673 second magnet mounting slot; 674 fourth mounting hole; 675 second cylindrical protrusion; 676 second connecting portion; 677 second stopper; 68 elastic element; 681 first engaging end; 682 second engaging end; 7 manipulation mechanism; 71 first manipulation device; 711 first end; 7111 third connecting portion; 712 connecting rod; 713 second end; 7131 first open slot; 7132 second open slot; 72 second manipulation device; 721 third open slot; 722 fourth open slot; 73 third manipulation device; 731 fifth open slot; 74 fourth manipulation device; 741 sixth open slot; 7A first control surface; 7B second control surface; 75 first pawl seat; 76 first pawl; 77 second pawl; 78 second pawl seat; 781 second position-limiting slot; 782 pawl mounting slot; 783 snap ring slot; 784 avoidance slot; 79 third pawl; 791 locking portion; 792 control portion; 7921 contact surface; 793 rotating portion; 710 third pawl seat; 719 fourth pawl; 701 first gear position angle; 702 second gear position angle; 703 third gear position angle; 704 fourth gear position angle; 705 fifth gear position angle; 706 sixth gear position angle; 8 control module; 9 gear-shifting operation module.

### DETAILED DESCRIPTION OF THE EMBODIMENTS

The embodiments of the present application are described in detail hereinafter, and examples of the embodiments are shown in the drawings, where the same or similar reference numerals represent the same or similar elements or elements having the same or similar functions throughout the description. These examples with reference to the accompanying drawings are exemplarily and only for the explanation of the present application, and should not be constructed as a limitation of the present application.

Throughout the description of the present application, it should be understood that the orientation or positional relationships indicated by terms such as "center", "longitudinal", "lateral", "length", "width", "thickness", "up", "down", "forward", "backward", "left", "right", "vertical", "horizontal", "top", "bottom", "inner", "outer", "clockwise", "anticlockwise", and the like are based on the orientation or positional relationships shown in the drawings, and are merely for the convenience of describing the present application and the simplification of the description, instead of indicating or implying that the device or component referred must be arranged in a particular orientation, or be constructed and operated in a particular orientation, and therefore should not be construed as a limitation to the scope of the present application. Furthermore, the terms "first", "second" are merely for purpose of description, and should not be construed as indicating or implying relative importance or implying the number of the indicated technical features. Therefore, the features defined by "first" and "second" may explicitly or implicitly include one or more of the features. In the description of the present application, the term "a plurality of" means two or more, unless specifically defined otherwise.

In the description of the present application, unless otherwise specified and limited, terms "mounting", "linkage", and "connection" should be broadly interpreted. For example, the "connection" may indicate a fixed connection, a removable connection, or an integral connection; may indicate a mechanical connection or an electrical connection or a connection in communication; may indicate a direct connection or an indirect connection via an intermediate medium; may indicate an internal communication between two components or an interaction between two components. Those skilled in the art may understand meanings of the foregoing terms in the present application based on specific conditions.

In the present application, unless otherwise explicitly defined and limited, the first feature being located "above" or "below" the second feature may include direct contact between the first and second features, and may also include indirect contact between the first and second features via another feature between them. Furthermore, the first feature being "above", "over" and "on" the second feature includes that the first feature is directly above and obliquely above the second feature, or simply indicates that the first feature is higher in horizontal height than the second feature. The first feature being "below", "under" and "lower than" the second feature includes that the first feature is directly below and obliquely below the second feature, or simply indicates that the first feature is lower in horizontal height than the second feature.

The disclosure hereinafter provides multiple different embodiments or examples for implementing different structures of the present application. To simplify the present application, components and settings in specific embodiments are described below. Of course, they are only examples and are not intended to limit the present application. Furthermore, according to the present application, reference numerals and/or reference letters may be repeated in different examples for the purpose of simplicity and clarity, which do not indicate a relationship between various embodiments and/or arrangements discussed. In addition, examples of various specific processes and materials are provided according to the present application. However, those skilled in the art may appreciate the application of other processes and/or the use of other materials.

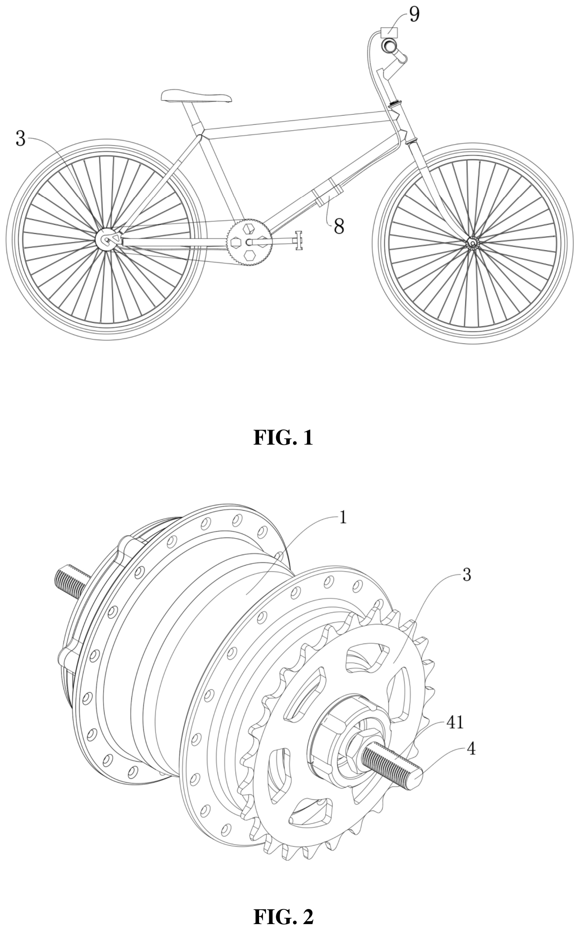

FIG. 1 shows a schematic structural view of a bicycle equipped with a manual-automatic integrated internal gear hub according to the present application. As shown, the manual-automatic integrated internal gear hub is laced to a rim of a rear wheel of the bicycle via spokes. A spindle 4 of the internal gear hub is inserted into a mounting slot of a rear fork of a bicycle frame. Both ends of the spindle 4 have threads to be fastened with two nuts respectively, thereby fixing the spindle 4 to the frame. To change the gear ratio of the internal gear hub manually or automatically, a control module 8 and a gear-shifting operation module 9 are further needed for control.

In some embodiments, a controller 641, the internal gear hub, and the gear-shifting operation module 9 are powered by a power source built into the control module 8. Of course, alternative power supply methods may also be available. For example, power may be provided by a front hub with a self-generating function, or by a rear hub with a self-generating function which is further provided in addition to this internal gear hub, or additionally provided by a photovoltaic panel that absorbs sunlight and converts it into electrical energy, etc.

FIG. 2 is a perspective view showing an operational state of the manual-automatic integrated internal gear hub according to the present application. An input member 3 is fixedly mounted on a right side of the manual-automatic integrated internal gear hub. The input member 3 is configured to transmit the torque generated by pedaling. In a chain transmission system, the input member 3 is a cassette. The rider drives the crank by pedaling, which in turn rotates the chainring. The chainring drives the cassette to rotate via a chain, thereby driving the output member 1 to rotate and propelling the rear wheel forward. In a belt transmission system, the input member 3 is a rear pulley. The rider drives the crank by pedaling, which in turn rotates the front pulley. The front pulley drives the rear pulley to rotate via a belt, thereby driving the output member 1 to rotate and propelling the rear wheel forward. In a shaft transmission system, the input member 3 is a bevel gear. Correspondingly, the rider outputs torque to the bevel gear via a transmission shaft, driving the output member 1 to rotate.

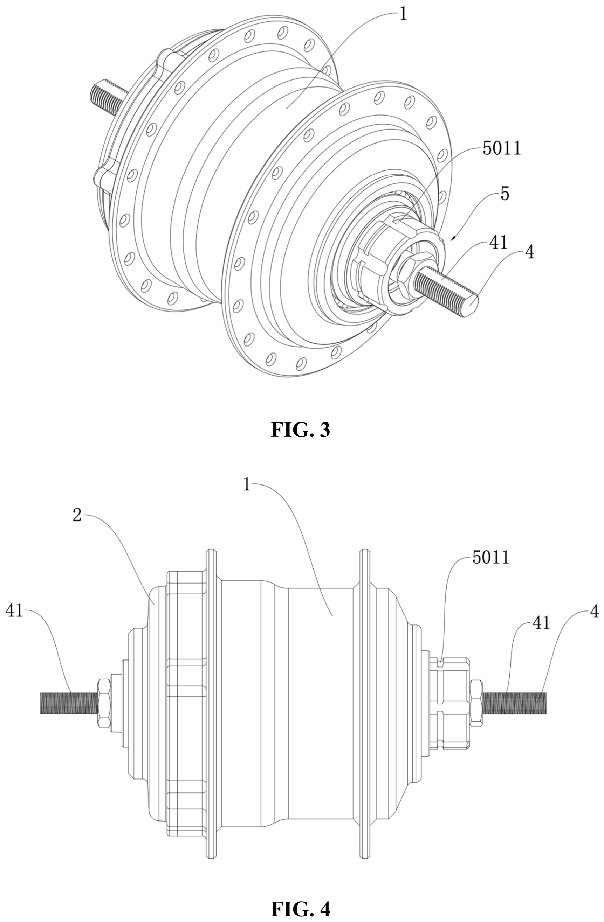

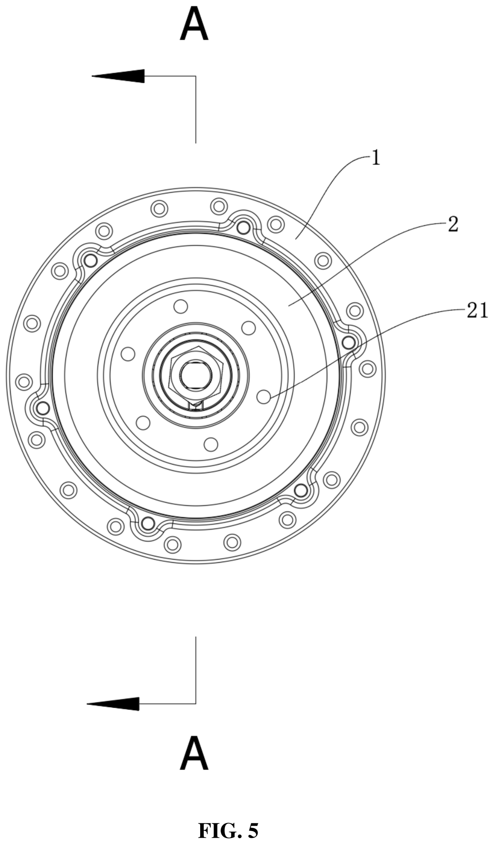

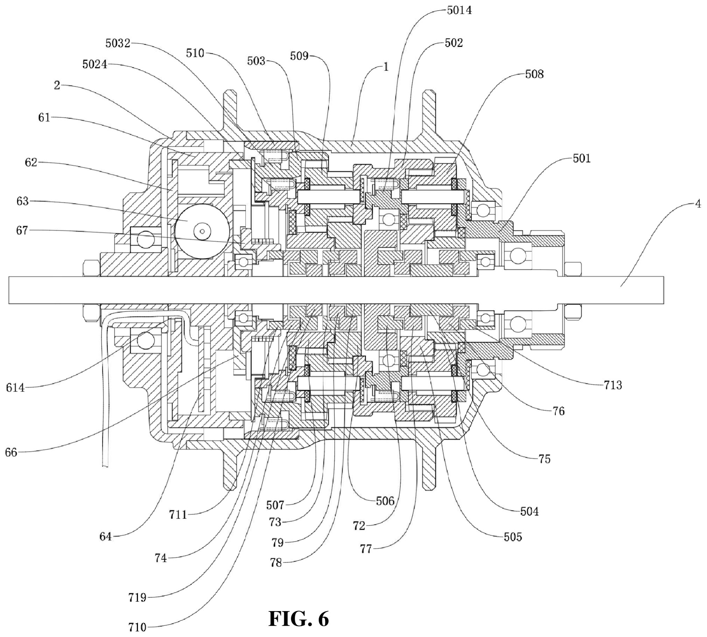

FIG. 3 is a perspective view of the manual-automatic integrated internal gear hub according to the present application. FIG. 4 is a front view of the manual-automatic integrated internal gear hub according to the present application. FIG. 5 is a right-side view of the manual-automatic integrated internal gear hub according to the present application. FIG. 6 is a sectional view taken along line A-A in FIG. 5. An end cover 2 is provided at the left end of the internal gear hub, and an output member 1 is provided at the right end of the internal gear hub. The end cover 2 and the output member 1 define a sealed cavity. Inside the cavity, there are provided a driving mechanism 6, a manipulation mechanism 7, and a transmission mechanism 5. A spindle 4 runs through a center of the internal gear hub. The driving mechanism 6, the manipulation mechanism 7, and the transmission mechanism 5 are mounted sequentially from left to right on the spindle 4. The spindle 4 is configured as a stepped smooth shaft as a whole. The outer circumferential surfaces of both ends of the spindle 4 are threaded so that the spindle is fastened to the rear fork of the frame by nuts. The spindle 4 is also machined with two position-limiting surfaces 41. Both position-limiting surfaces 41 are parallel to an axis of the spindle 4, and are parallel to each other. The position-limiting surfaces 41 functions to assemble and limit the driving mechanism 6 and the manipulation mechanism 7. The manipulation mechanism 7 is provided inside the transmission mechanism 5, and the outer side of the transmission mechanism 5 is connected to the output member 1 to transmit torque.

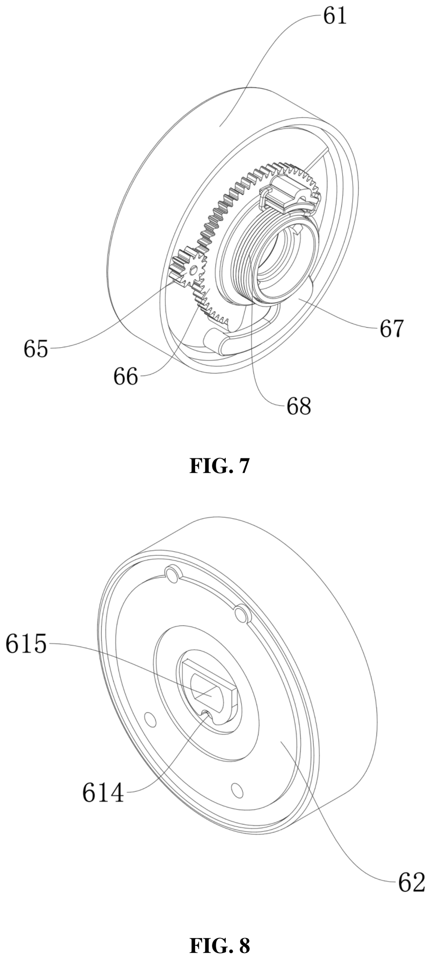

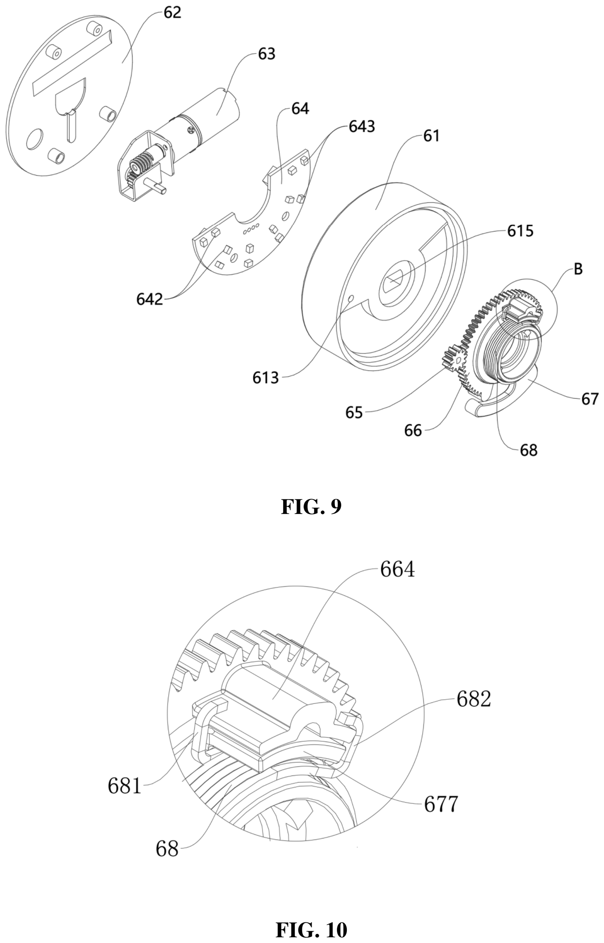

FIG. 7 is a perspective view of a driving mechanism 6. FIG. 8 is another perspective view of the driving mechanism 6. FIG. 9 is an exploded view of the driving mechanism 6. FIG. 10 is an exploded view of the driving mechanism 6 viewing from another angle. The driving mechanism 6 of the manual-automatic integrated internal gear hub according to the present application includes a control box 61 and a sealing cover 62 mounted at an opening of the control box 61. A driving device mounting slot 611 is provided inside the control box 61 and located at an upper part of the control box 61, and a driving device 63 is mounted in the driving device mounting slot 611. A circuit board mounting slot 612 is also provided inside the control box 61 and located at a lower part of the control box 61, and a circuit board 64 is mounted in the circuit board mounting slot 612. A first position-limiting slot 615 is provided at and runs through the center of the control box 61. The first position-limiting slot 615 is shaped to match with the longitudinal section of the spindle 4 taken at the position-limiting surface 41, and thus functions to prevent the control box 61 from rotating freely after being mounted on the spindle 4. To facilitate the power supply and transmission of control signals to the circuit board 64, the control box 61 is also provided with a wire passing hole 614. The wire passing hole 614 is located below the first position-limiting slot 615, and cables pass through the wire passing hole 614 from the outside of the control box 61 and are connected to the circuit board 64. The control box 61 is also provided with a through-hole 613 for passage of the output shaft of the driving device 63. A sealed structure is formed inside the control box 61, which can effectively protect the circuit board 64 and the driving device 63 from moisture and dust, extending the service life of the driving device 63.

The circuit board 64 is semi-circular in shape. The circuit board 64 is provided with a gear position feedback module, which is used to obtain the gear position to which the driving device 63 of the driving mechanism 6 has rotated and the current gear position of the internal gear hub. In a specific embodiment, a controller 641 and a third Hall element 644 are welded on one side of the circuit board 64 facing the sealing cover 62, and multiple first Hall elements 642 and second Hall elements 643 are welded on the other side of the circuit board 64 facing away from the sealing cover 62. In this embodiment, the manual-automatic integrated internal gear hub is equipped with six gears, so six first Hall elements 642 and six second Hall elements 643 are correspondingly provided. As shown in FIG. 9, the first Hall elements 642 and the second Hall elements 643 are arranged in two rows, with six Hall elements in each row being evenly spaced, and each column of Hall elements in the two rows being located in the radial direction of the circuit board 64. The first Hall elements 642 are arranged radially inward of the second Hall elements 643. The first Hall elements 642 correspond to and sense a magnet (not shown) mounted in the first magnet mounting slot 665. The second Hall elements 643 correspond to and sense a magnet (not shown) mounted in the second magnet mounting slot 673. When the magnet in the first magnet mounting slot 665 rotates around the axis and sweeps across the first Hall elements 642, and the magnet in the second magnet mounting slot 673 rotates around the axis and sweeps across the second Hall elements 643, the first Hall elements 642 and the second Hall elements 643 sense the change in magnetic field strength and generate a corresponding pulse. Therefore, the gear position to which it has rotated can be determined by obtaining this pulse signal. It should be noted that the pulse signal obtained by the first Hall element 642 is used to determine the gear position to which the driving device 63 of the driving mechanism 6 has rotated, and the pulse signal obtained by the second Hall element 643 is used to determine the current gear position of the internal gear hub.

As shown in FIG. 9, the position corresponding to the first Hall element 642 on the far left of the circuit board 64 is a first gear position. In a counterclockwise direction, a second gear position, a third gear position, a fourth gear position, a fifth gear position, and a sixth gear position follow in sequence. The position corresponding to the first Hall element 642 on the far right of the circuit board 64 is the sixth gear position.

To obtain the rotational speed of the internal gear hub for controlling automatically gear-shifting thereof, the driving mechanism 6 is provided with a rotational speed feedback module, which includes the third Hall element 644. The third Hall element 644 is welded on the circuit board 64. Referring to FIG. 5, the end cover 2 is provided with a third magnet mounting slot 21 on its side surface. The magnet mounted in the third magnet mounting slot 21 is located in alignment with the position of the third Hall element 644. During the rotation of the internal gear hub, the controller 641 obtains the rotational speed by detecting the number of pulses generated by the third Hall element 644 per unit time. The greater the number of pulses, the higher the frequency and the higher the rotational speed of the internal gear hub, and vice versa.

In this embodiment, the driving device 63 is in the form of a motor with a speed reducer. To reduce the thickness of the driving device 63 and reserve sufficient space for the manipulation mechanism 7 and the transmission mechanism 5, the motor is mounted horizontally in the driving device mounting slot 611. As a specific example, the speed reducer is a worm gear mechanism. The angle between the input shaft and the output shaft of the worm gear mechanism is 90 degrees, which may convert orientation of the output shaft of the motor from being perpendicular to the axis of the control box 61 to being parallel to the axis of the control box 61. The output shaft of the driving device 63 passes through the through-hole 613 of the control box 61 and is fastened to the output gear 65. The output gear 65 is externally meshed with the gear-shifting actuating gear 66.

There may be the possibility of jamming in the manipulation mechanism 7 and the transmission mechanism 5 during gear shifting. If the driving mechanism 6 continues to operate after jamming occurs, it may lead to damage to the driving mechanism 6, a decrease in the repeated positioning accuracy of the manipulation mechanism 7, motor burnout, or other issues. To avoid these issues, a buffer structure is provided to protect the driving mechanism 6 in case of jamming.

In this embodiment, the buffer structure includes a gear-shifting protective member 67 and an elastic element 68. In case of provision of the buffer structure, it is possible to obtain not only the gear position information of the gear-shifting actuating gear 66 but also the gear position information of the gear-shifting protective member 67. The controller 641 compares the two gear position information. When the two gear position information is synchronized, it indicates that the previous gear shift was normal, and the next gear shift can be executed normally. When the two gear position information is inconsistent, it indicates occurrence of a jamming phenomenon, and the controller 641 needs to call a specific program to control the driving device 63 to eliminate the jamming before executing the next gear shift.

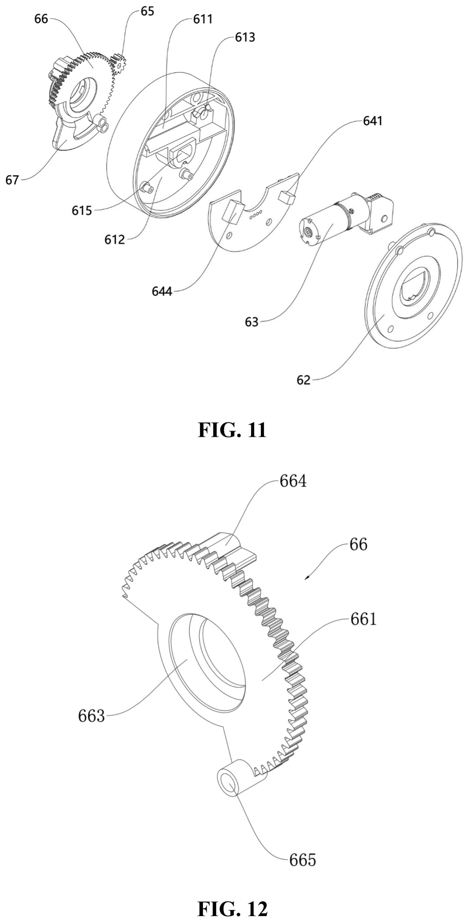

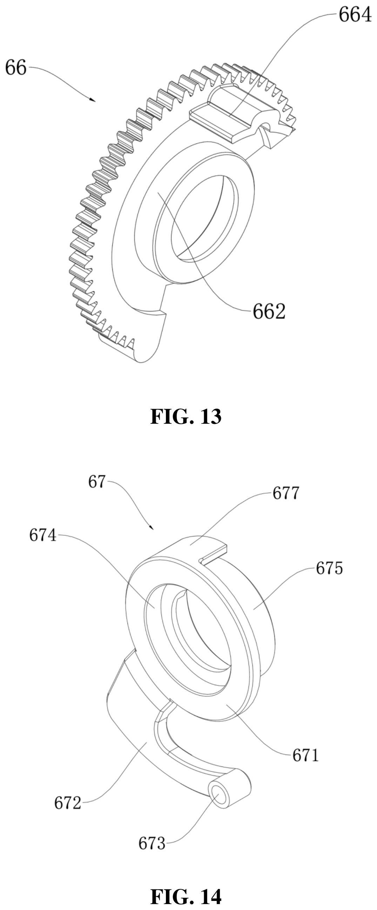

FIG. 12 shows a perspective view of the gear-shifting actuating gear 66, and FIG. 13 shows another perspective view of the gear-shifting actuating gear 66. The gear-shifting actuating gear 66 has a sector gear body 661 with a central angle greater than 180 degrees. At the center of the sector gear body 661, there are provided a first cylindrical protrusion 662 and a third mounting hole 663 formed in the first cylindrical protrusion 662. The third mounting hole 663 is used for mounting a bearing, which supports the gear-shifting actuating gear 66 and allows the gear-shifting actuating gear 66 to rotate around its own axis. The gear-shifting actuating gear 66 is provided thereon with a raised first stopper 664, which protrudes in the same direction as the first cylindrical protrusion 662. At the lower end of the sector gear body 661, there is provided a first magnet mounting slot 665, in which a magnet is mounted.

FIG. 13 shows a perspective view of the gear-shifting protective member 67, and FIG. 14 shows another perspective view of the gear-shifting protective member 67. The gear-shifting protective member 67 has an annular body 671. Below the annular body 671, there is provided a first connecting portion 672. At the end of the first connecting portion 672, there is provided a second magnet mounting slot 673. At the center of the annular body 671, there are provided a second cylindrical protrusion 675 and a fourth mounting hole 674 formed in the second cylindrical protrusion 675. On one side of the opening of the fourth mounting hole 674, there is provided a second connecting portion 676, which is inserted in and connected to the manipulation mechanism 7. In a specific example, two second connecting portions 676 are provided and each in the form of a square protrusion.

In a specific example, the first connecting portion 672 is shaped to be an L-shaped swing arm outwardly extending. It should be noted that the annular body 671 and the first connecting portion 672 are not in the same plane. The first connecting portion 672 extends outwardly from the end face of the annular body 671. The purpose of this arrangement is to enable the first magnet mounting slot 665 and the second magnet mounting slot 673 to be in the same plane by protruding the first connecting portion 672 from the end face of the annular body 671 by an axial distance equal to the thickness of the sector gear body 661 when the gear-shifting actuating gear 66 is assembled with the gear-shifting protective member 67, specifically, when the first cylindrical protrusion 662 of the gear-shifting actuating gear 66 is fitted into the fourth mounting hole 674 of the gear-shifting protective member 67. As such, it is beneficial for the first Hall element 642 on the circuit board 64 to identify signals of the magnetic field strength change.

The annular body 671 further has a raised second stopper 677, which protrudes in the same direction as the second cylindrical protrusion 675. The first stopper 664 and the second stopper 677 are both strip-shaped arc protrusions. The length of the second stopper 677 is slightly less than the length of the first stopper 664. After the gear-shifting actuating gear 66 and the gear-shifting protective member 67 are assembled, as shown in FIGS. 9 and 10, an elastic element 68 is mounted around the outer circumferential surface of the second cylindrical protrusion 675. The elastic element 68 has a first engaging end 681 and a second engaging end 682, which respectively abut against the two side surfaces of the first stopper 664. At this time, the second stopper 677 is exactly located below the first stopper 664. Since the length of the second stopper 677 is slightly less than the length of the first stopper 664, under normal conditions, the first engaging end 681 and the second engaging end 682 of the elastic element 68 do not come into contact with the side edges of the second stopper 677. In this embodiment, the elastic element 68 is a torsion spring.

When the manipulation mechanism 7 and the transmission mechanism 5 operate normally without jamming, the driving device 63 rotates to drive the output gear 65 to rotate, which in turn drives the gear-shifting actuating gear 66 to rotate since the output gear 65 are externally meshed with the gear-shifting actuating gear 66. The gear-shifting actuating gear 66 drives the gear-shifting protective member 67 to rotate synchronously via the elastic element 68. When the manipulation mechanism 7 and the transmission mechanism 5 experience jamming, the gear-shifting protective member 67 will encounter resistance that prevents its rotation. Then, a relative circumferential displacement will occur between the gear-shifting actuating gear 66 and the gear-shifting protective member 67. The first stopper 664 of the gear-shifting actuating gear 66 and the second stopper 677 of the gear-shifting protective member 67 will be staggered. The first engaging end 681 of the elastic element 68 still abuts against the side of the first stopper 664, whereas the side of the second stopper 677 pushes the second engaging end 682 of the elastic element 68, so that the second engaging end 682 is separated from the side of the first stopper 664 and instead abuts against the side of the second stopper 677. The distance between the first engaging end 681 and the second engaging end 682 of the elastic element 68 is increasing, and the elastic element 68 is in an energy storing state. The controller 641 detects the inconsistent gear position information of the gear-shifting actuating gear 66 and the gear-shifting protective member 67, indicating a jamming phenomenon. Subsequently, the controller 641 controls the driving device 63 to rotate forward and backward a certain number of times to eliminate the jamming of the manipulation mechanism 7 and the transmission mechanism 5, and the elastic element 68 returns to its initial state.

By using the elastic element 68 to connect the gear-shifting actuating gear 66 and the gear-shifting protective member 67, a flexible connection replaces a rigid connection. In this way, the torque generated by the driving device 63 in a jamming state can be absorbed by the elastic element 68, acting as a buffer. It will not cause damage to the components or burnout of the driving device 63, effectively extending the service life of the driving mechanism 6.

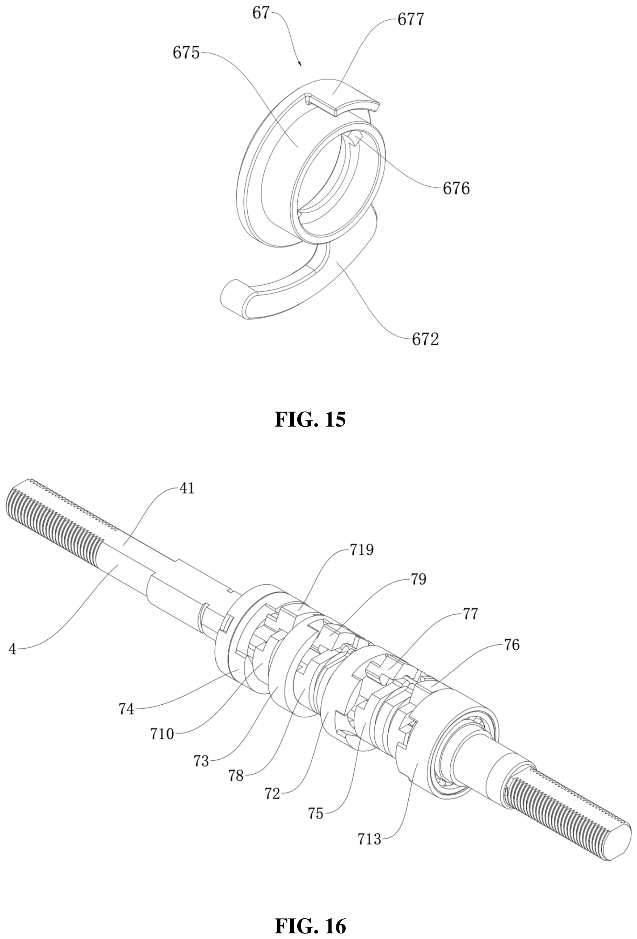

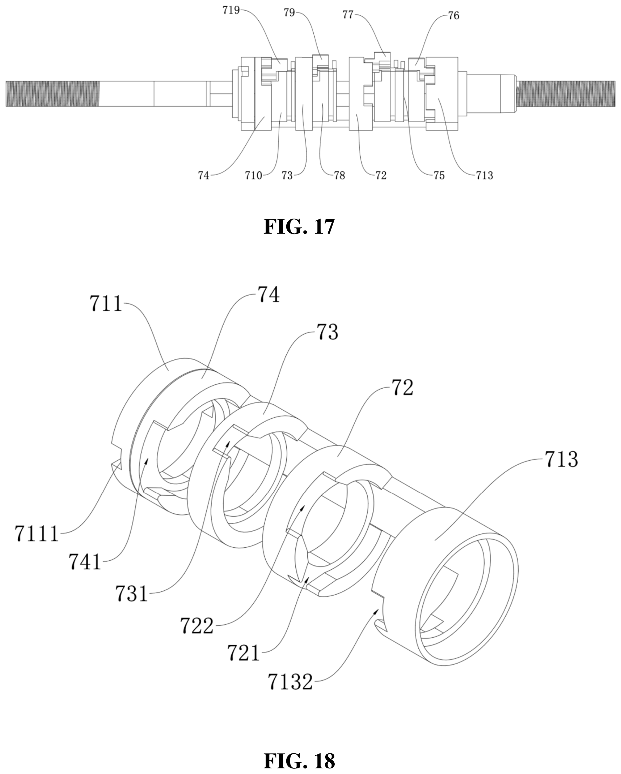

FIG. 16 shows a perspective view of the manipulation mechanism 7, and FIG. 17 shows a front view of the manipulation mechanism 7. The manipulation mechanism 7 includes a manipulation device, pawls, and pawl seats. The pawls are mounted on the pawl seats. The manipulation device has an open slot. By driving the manipulation device to rotate with the driving device 63, the pawls may be controlled to be retracted and extended regularly.

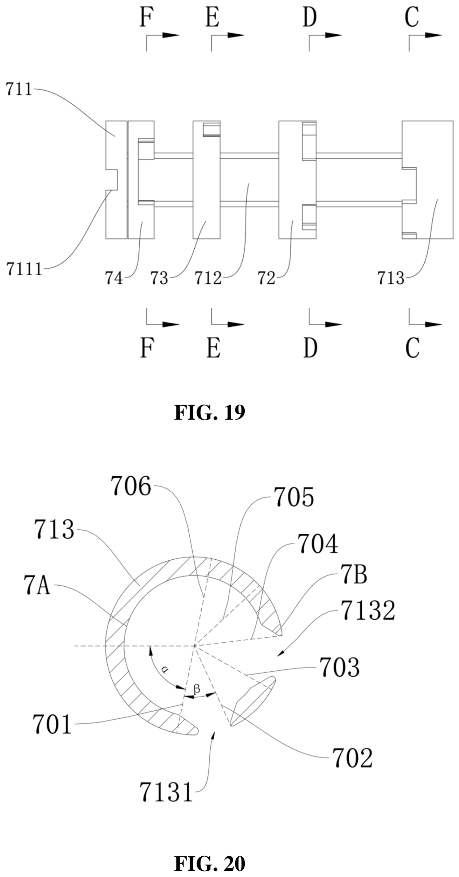

In this embodiment, to achieve control of multiple gear positions and facilitate assembly, four manipulation devices are provided, as shown in FIGS. 18 and 19, including a first manipulation device 71, a second manipulation device 72, a third manipulation device 73, and a fourth manipulation device 74. The first manipulation device 71 includes a first end 711 at one end of the manipulation mechanism 7 and a second end 713 at the other end of the manipulation mechanism 7, with the first end 711 and the second end 713 being connected by a connecting rod 712. The first end 711 of the first manipulation device 71, the fourth manipulation device 74, the third manipulation device 73, the second manipulation device 72, and the second end 713 of the first manipulation device 71 are arranged from left to right in sequence. There are reserved spaces between adjacent manipulation devices for mounting the pawl seats and the pawls. For example, a third pawl seat 710 and a fourth pawl 719 are mounted in the space between the fourth manipulation device 74 and the third manipulation device 73; a second pawl seat 78 and a third pawl 79 are mounted in the space between the third manipulation device 73 and the second manipulation device 72; and a first pawl seat 75 and a second pawl 77 are mounted in the space between the second manipulation device 72 and the second end 713 of the first manipulation device 71.

It should be noted that the above arrangement of the manipulation devices is only adapted to the transmission mechanism 5 in a special structure, and that the number and structure of the manipulation devices are not limited in practice as long as they can be easily processed and assembled. For example, the first end 711 of the first manipulation device 71 may be integrally formed with the fourth manipulation device 74. For example, the first end 711 of the first manipulation device 71, the fourth manipulation device 74, and the third manipulation device 73 may be integrally formed into one unitary structure; and the second manipulation device 72 and the second end 713 of the first manipulation device 71 may be integrally formed into another unitary structure. These two unitary structures are then assembled to form a complete manipulation device. For example, the second pawl seat 78 and the third pawl seat 710 may be integrally formed into a large pawl seat, and the first pawl seat 75 may be divided into two small pawl seats. Any simple modifications, equivalent changes, and alternations made to the above embodiments based on the technical essence of the present application should fall within the scope of the protection of the technical solutions of the present application.

The first end 711 is provided with a third connecting portion 7111, which is designed to facilitate assembly with the driving mechanism 6. The third connecting portion 7111 is matched with the aforementioned second connecting portion 676. Specifically, if the second connecting portion 676 is in the form of a square protrusion, the third connecting portion 7111 is in the form of a corresponding square recess. Conversely, the second connecting portion 676 may be in the form of a square recess, and the third connecting portion 7111 may be in the form of a corresponding square protrusion.

The fourth manipulation device 74, the third manipulation device 73, the second manipulation device 72, and the second end 713 of the first manipulation device 71 all feature a ring-shaped structure, and are all provided with open slots on their outer circumferential surfaces, which are used to drive the pawls to extend and retract.

FIG. 20 shows a sectional view of the second end 713 of the first manipulation device 71 taken along the line C-C. The second end 713 has two open slots on its outer circumferential surface, namely the first open slot 7131 and the second open slot 7132. The inner circumferential surface of the second end 713 is the first control surface 7A, and the side walls of the first open slot 7131 and the second open slot 7132 are the second control surfaces 7B. In this embodiment, the first control surface 7A is an arc surface, and the second control surface 7B is an inclined surface. The arc surface of the first control surface 7A transitions to the outer circumferential surface of the second end 713 via the inclined surface of the second control surface 7B. Both the first control surface 7A and the second control surface 7B are provided to control extension and retraction of the pawl, which will be described in detail below.

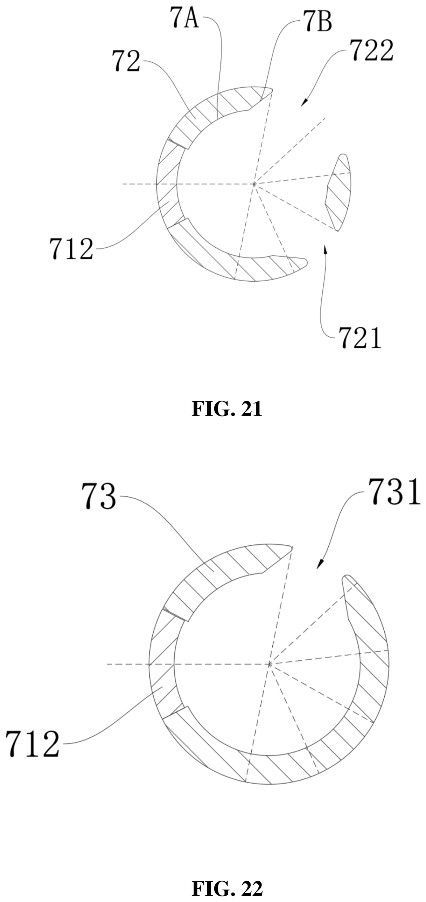

Referring to FIGS. 21 to 23, similarly, the second manipulation device 72 is provided with a third open slot 721 and a fourth open slot 722; the third manipulation device 73 has a fifth open slot 731; and the fourth manipulation device 74 has a sixth open slot 741.

In FIG. 20, assume there are six straight lines radially passing through the center of the second end 713. The angle between the first straight line and the horizontal line is α, and the angle between every two adjacent straight lines is β. Then, if the first to sixth straight lines represent the first to sixth gear position angles 701 to 706 respectively, the first to sixth gear position angles 701 to 706 are α, α + β, α + 2β, α + 3β, α + 4β, and α + 5β respectively.

Among the open slots of the aforementioned manipulation devices, the first open slot 7131 is within the range from the first gear position angle 701 to the second gear position angle 702; the third open slot 721 is within the range from the second gear position angle 702 to the third gear position angle 703; the second open slot 7132 is within the range from the third gear position angle 703 to the fourth gear position angle 704; the fourth open slot 722 is within the range from the fourth gear position angle 704 to the sixth gear position angle 706; the fifth open slot 731 is within the range from the fifth gear position angle 705 to the sixth gear position angle 706; and the sixth open slot 741 is within the range from the third gear position angle 703 to the fifth gear position angle 705.

By controlling the manipulation device to rotate to different angles, different pawls can be controlled to be expanded or retracted, thereby shifting to different gears. In a specific embodiment, when the manipulation device is rotated to the first gear position angle 701, all of the pawls are in the retracted state; when rotated to the second gear position angle 702, the first pawl 76 is extended, and the remaining pawls are retracted; when rotated to the third gear position angle 703, the second pawl 77 is extended, and the remaining pawls are retracted; when rotated to the fourth gear position angle 704, the first pawl 76 and the fourth pawl 719 are extended, and the remaining pawls are retracted; when rotated to the fifth gear position angle 705, the second pawl 77 and the fourth pawl 719 are extended, and the remaining pawls are retracted; and when rotated to the sixth gear position angle 706, the second pawl 77 and the third pawl 79 are extended, and the remaining pawls are retracted.

It is noted that the opening degrees of the first open slot 7131, the second open slot 7132, the third open slot 721, and the fifth open slot 731 are the same and are less than the angle β, approximately two-thirds of the angle β; and that the fourth open slot 722 and the sixth open slot 741 are actually a combination of two open slots, and their opening degrees are twice that of the other four open slots. The right end of the first open slot 7131 coincides with the second gear position angle 702 because, when the manipulation device is rotated to the second gear position angle 702, the first pawl 76 controlled by the first open slot 7131 must be fully extended. Otherwise, the first pawl 76 and the first sun gear of the transmission mechanism 5 would be insufficiently locked, causing abnormal noises, slippage, gear jumping, or other issues occurred in the internally gear hub.

The aforementioned first gear position angle 701 to the sixth gear position angle 706 respectively correspond to the first Hall elements 642 in each column on the circuit board 64.

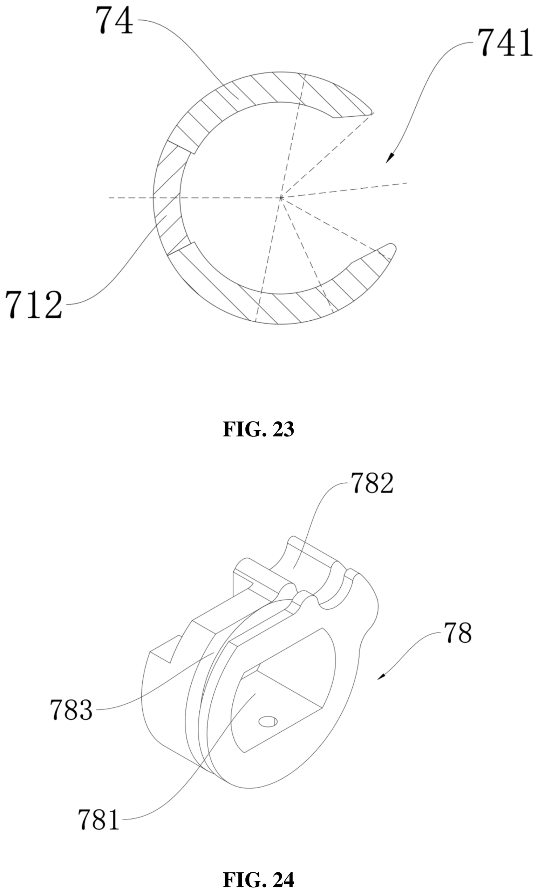

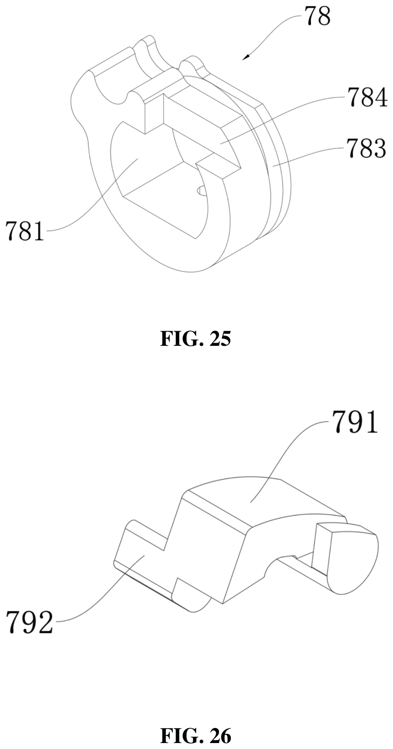

FIG. 24 shows a perspective view of the second pawl seat 78. FIG. 25 shows another perspective view of the second pawl seat 78. The second pawl seat 78 has a cylindrical structure. A second position-limiting slot 781 is provided at the center of the second pawl seat 78. Similar to the first position-limiting slot 615, the second position-limiting slot 781 is shaped to match with the longitudinal section of the spindle 4 taken at the limiting surface 41, and thus functions to prevent the second pawl seat 78 from rotating freely after being mounted on the spindle 4. At the top of the second pawl seat 78, there is provided a pawl mounting slot 782, in which the third pawl 79 is mounted. On the outer circumferential surface of the second pawl seat 78, provided is a snap ring slot 783. The plane of the snap ring slot 783 is perpendicular to the axial direction of the second pawl seat 78. A snap ring (not shown) is mounted in the snap ring slot 783. During assembly, the snap ring is in a contracted state, and thus has a tendency to expand outward, which can apply a force to the third pawl 79 and move the third pawl 79 outwardly. The third pawl 79 can return inward when subjected to a force in a specific direction.

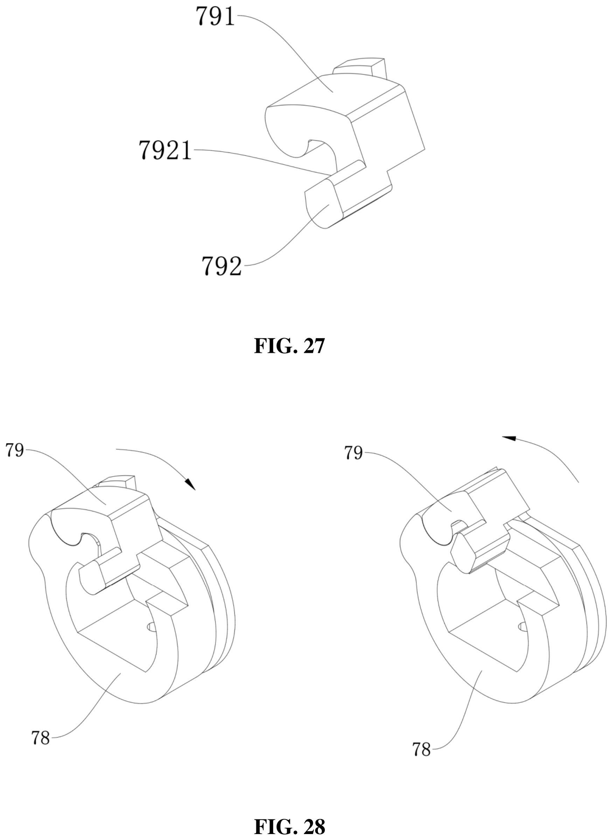

The structure of the third pawl 79 is shown in FIGS. 26 and 27. The third pawl 79 has a locking portion 791, a control portion 792, and a rotating portion 793. The rotating portion 793 is located at the bottom of the locking portion 791 and has a semi-cylindrical shape. The pawl mounting slot 782 of the second pawl seat 78 is shaped to match with the rotating portion 793. The rotating portion 793 is hinged in the pawl mounting slot 782, allowing the third pawl 79 to rotate around the axis of the rotating portion 793. The locking portion 791 of the third pawl 79 is configured to be locked with or disengaged from the gear in the transmission mechanism 5. The control portion 792 of the third pawl 79 protrudes along the thickness direction of the locking portion 791, and has a contact surface 7921. FIG. 28 schematically shows the two states of the third pawl 79. When the manipulation device is rotated to a specific angle, the first control surface 7A of the manipulation device comes into contact with the contact surface 7921 of the control portion 792. The first control surface 7A applies a pressure towards the center of the second pawl seat 78 to the contact surface 7921 of the control portion 792, forcing the third pawl 79 to retract inward against the force of the snap ring. When the manipulation device is rotated to another specific angle, the second control surface 7B (i.e., the side surface of the open slot) of the manipulation device, instead of the first control surface 7A, comes into contact with the contact surface 7921 of the control portion 792. The pressure which is applied by the second control surface 7B towards the center of the second pawl seat 78 gradually decreases, and the third pawl 79 is gradually extended outward.

To prevent interference between the retracted third pawl 79 and the second pawl seat 78, the second pawl seat 78 is provided with an avoidance slot 784.

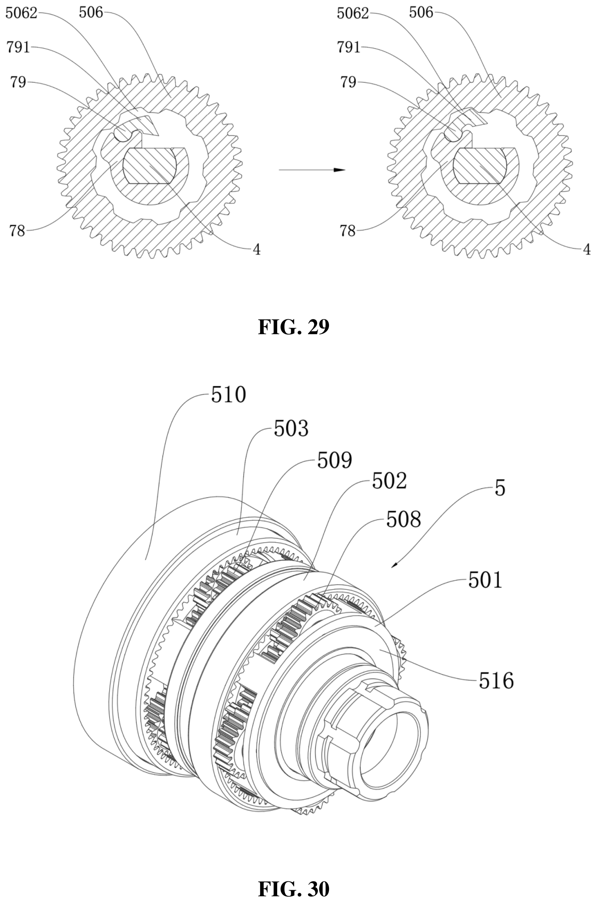

FIG. 29 schematically shows interaction between the third pawl 79 and the third sun gear 506. The third sun gear 506 is supported by a bearing and has a locking slot 5062 at its center. The shape of the locking slot 5062 is similar to that of a spline slot, except that the slot walls of the locking slot 5062 are flared outward. The slot walls of the locking slot 5062 correspond to the side walls of the third pawl 79. When the third pawl 79 is retracted inward, the locking portion 791 of the third pawl 79 does not come into contact with the slot walls of the locking slot 5062, and the third sun gear 506 is in a free state. When the third pawl 79 is expanded outward, the locking portion 791 of the third pawl 79 abuts against the slot wall of the locking slot 5062, and the third sun gear 506 is in a locked state, meaning that the third sun gear 506 cannot rotate counterclockwise.

Similarly, the first sun gear 504, the second sun gear 505, and the third sun gear 506 are all provided with the same locking slot 5062.

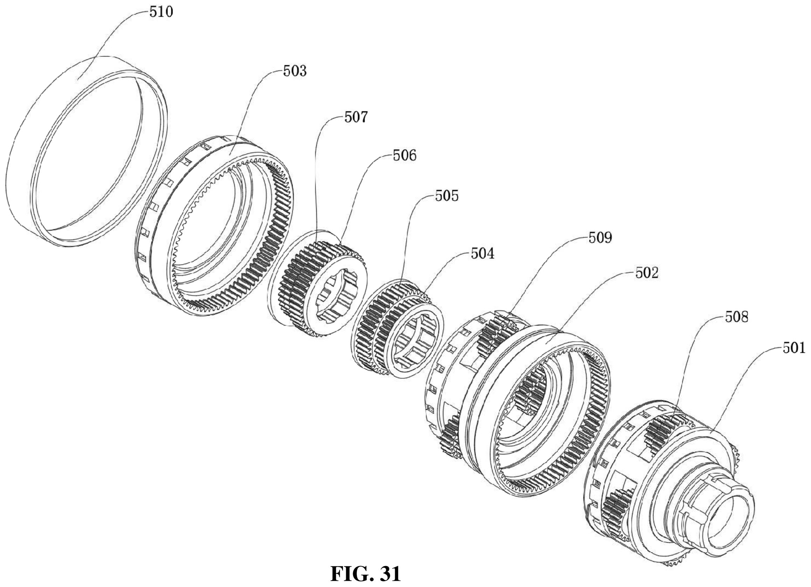

FIG. 30 shows a perspective view of the transmission mechanism 5. FIG. 31 shows an exploded view of the transmission mechanism 5. The transmission mechanism 5 includes at least two stages of planetary gear mechanisms and at least one clutch structure. In this embodiment, two stages of planetary gear mechanisms are provided. Each planetary gear mechanism includes a sun gear, a planet carrier, a ring gear, and at least one planetary gear. Specifically, the transmission mechanism 5 includes a first transmission member 501, a second transmission member 502, a third transmission member 503, a first sun gear 504, a second sun gear 505, a third sun gear 506, a fourth sun gear 507, a first double planetary gear 508, and a second double planetary gear 509. The first-stage planetary gear mechanism includes the first sun gear 504, the second sun gear 505, the first double planetary gear 508, the first transmission member 501, and the second transmission member 502. The second-stage planetary gear mechanism includes the third sun gear 506, the fourth sun gear 507, the second double planetary gear 509, the second transmission member 502, and the third transmission member 503.

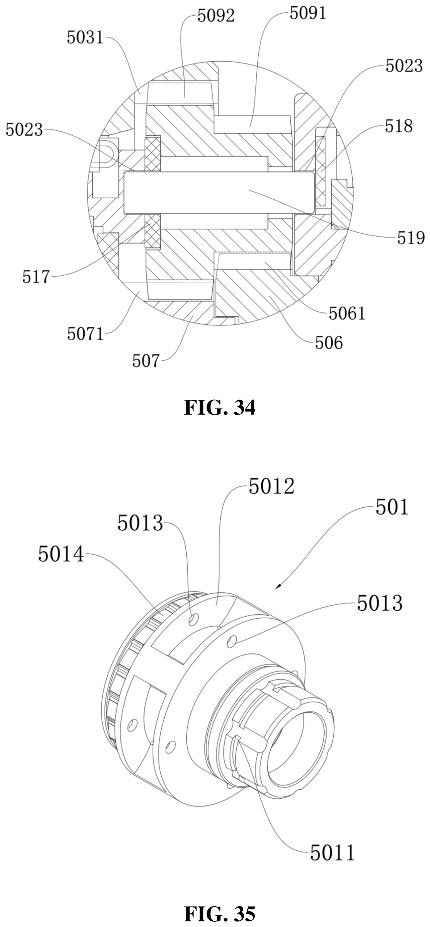

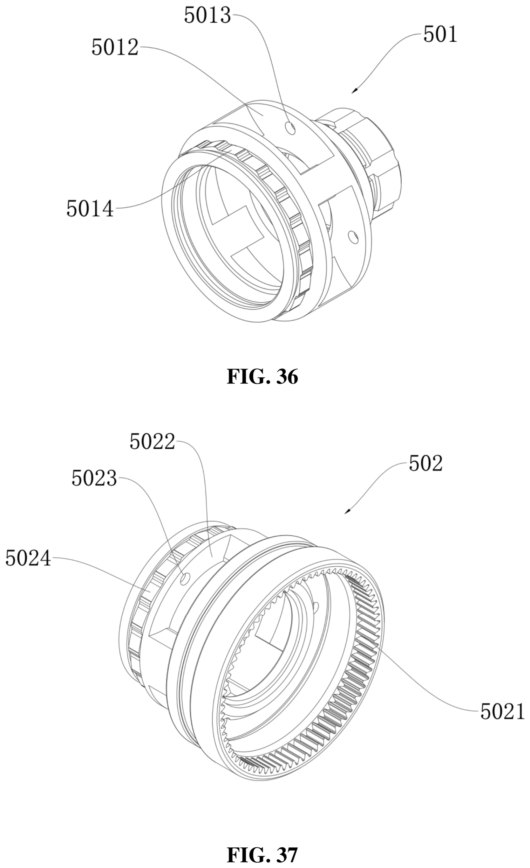

FIG. 35 shows a perspective view of the first transmission member 501. FIG. 36 shows another perspective view of the first transmission member 501. The first transmission member 501 is of a hollow cylindrical structure with a large diameter at the left end and a small diameter at the right end. On the outer circumferential surface of the right end of the first transmission member 501, provided is an input member mounting slot 5011. The input member 3 is mounted in the input member mounting slot 5011 and is fastened to the first transmission member 501 to transmit torque. The first sun gear 504 and the second sun gear 505 are mounted in the left end of the first transmission member 501 of the hollow cylindrical structure. The first sun gear 504 and the second sun gear 505 are arranged side by side, and are respectively limited by the first sun gear retaining ring 513 and the second sun gear retaining ring 514 at their left and right sides.

The outer circumferential surface of the first transmission member 501 is provided thereon with a first mounting slot 5012. The two opposite slot walls of the first mounting slot 5012 are respectively provided therein with two first mounting holes 5013. The first double planetary gear 508 is mounted in the first mounting slot 5012 by passing the first pin 511 through the central hole of the first double planetary gear 508, the first washer 512, and the first mounting holes 5013. The first pin 511 is limited by the first pin retaining rings 516 at both ends. The first pin 511 is in an interference fit with the first mounting holes 5013. The central hole of the first double planetary gear 508 and the first washer 512 are in a clearance fit or a transition fit with the first pin 511, allowing the first double planetary gear 508 to rotate around its own axis.

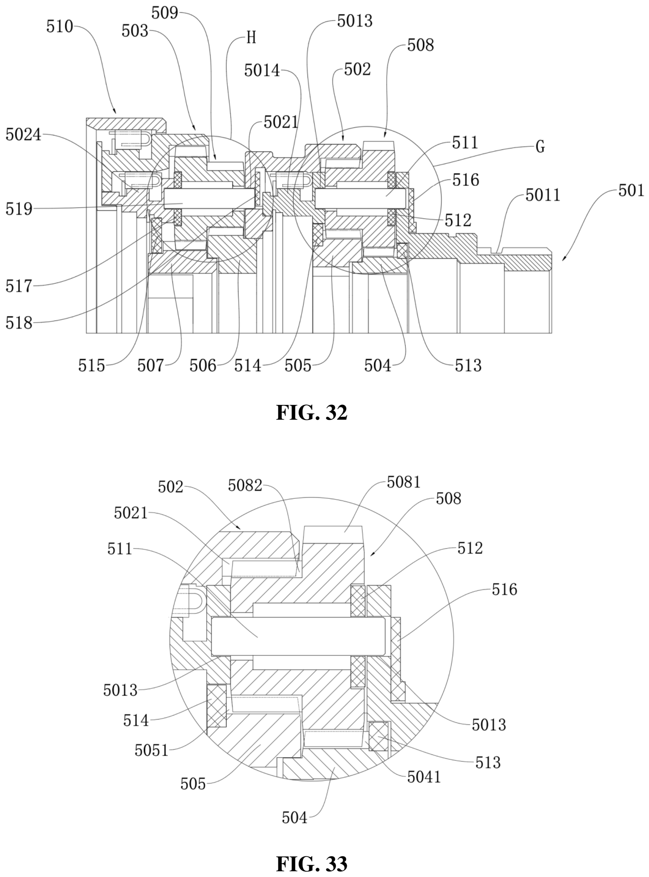

As shown in FIGS. 32 and 33, the first double planetary gear 508 has seventh gear teeth 5081 and eighth gear teeth 5082. The seventh gear teeth 5081 are located on the right side of the eighth gear teeth 5082. Directly below the first double planetary gear 508, the first sun gear 504 and the second sun gear 505 are mounted. The third gear teeth 5041 of the first sun gear 504 are externally meshed with the seventh gear teeth 5081 of the first double planetary gear 508, and the fourth gear teeth 5051 of the second sun gear 505 are externally meshed with the eighth gear teeth 5082 of the first double planetary gear 508.

In this embodiment, four pairs of first mounting slots 5012 are provided, so four first double planetary gears 508 can be mounted. The number of first double planetary gears 508 may be determined based on the actual working conditions and load of the transmission mechanism 5. Generally, the greater the load, the more the first double planetary gears 508.

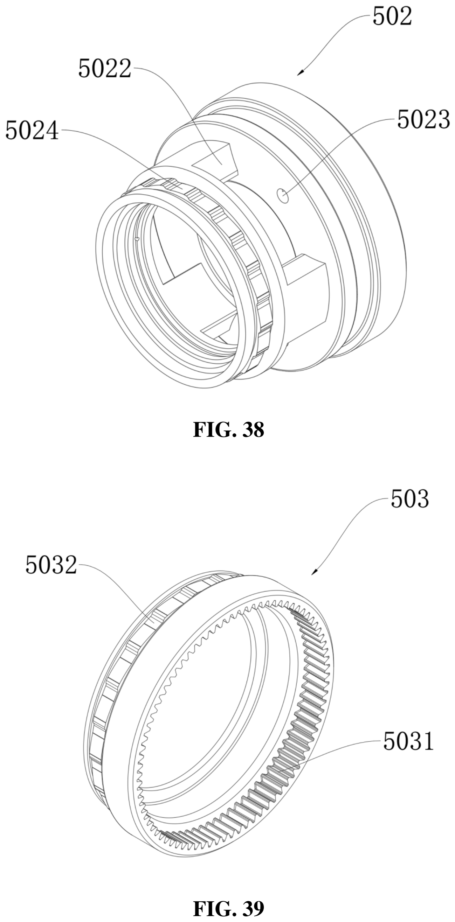

FIG. 37 shows a perspective view of the second transmission member 502. FIG. 38 shows another perspective view of the second transmission member 502. The second transmission member 502 is of a hollow cylindrical structure with a small diameter at the left end and a large diameter at the right end. First gear teeth 5021 are provided at the opening of the right end of the second transmission member 502, which function as the ring gear of the planetary gear mechanism. The first gear teeth 5021 of the second transmission member 502 are internally meshed with the eighth gear teeth 5082 of the first double planetary gear 508.

The third sun gear 506 and the fourth sun gear 507 are mounted in the left end of the second transmission member 502 of the hollow cylindrical structure. The third sun gear 506 and the fourth sun gear 507 are arranged side by side, and are limited by the fourth sun gear retaining ring 515 at their left and right sides.

The outer circumferential surface of the second transmission member 502 is provided thereon with a second mounting slot 5022. The two slot walls of the second mounting slot 5022 are respectively provided with two second mounting holes 5023. The second double planetary gear 509 is mounted in the second mounting slot 5022 by inserting the second pin 519 through the central hole of the second double planetary gear 509, the second washer 517, and the second mounting holes 5023. The second pin 519 is position-limited by the second pin retaining rings 518 at both ends. The second pin 519 is in an interference fit with the second mounting holes 5023. The central hole of the second double planetary gear 509 and the second washer 517 are in a clearance fit or a transition fit with the second pin 519, allowing the second double planetary gear 509 to rotate around its own axis.

As shown in FIGS. 32 and 34, the second double planetary gear 509 has ninth gear teeth 5091 and tenth gear teeth 5092. The ninth gear teeth 5091 are located on the right side of the tenth gear teeth 5092. Directly below the second double planetary gear 509, the third sun gear 506 and the fourth sun gear 507 are mounted. The fifth gear teeth 5061 of the third sun gear 506 are externally meshed with the ninth gear teeth 5091 of the second double planetary gear 509, and the sixth gear teeth 5071 of the fourth sun gear 507 are externally meshed with the tenth gear teeth 5092 of the second double planetary gear 509.

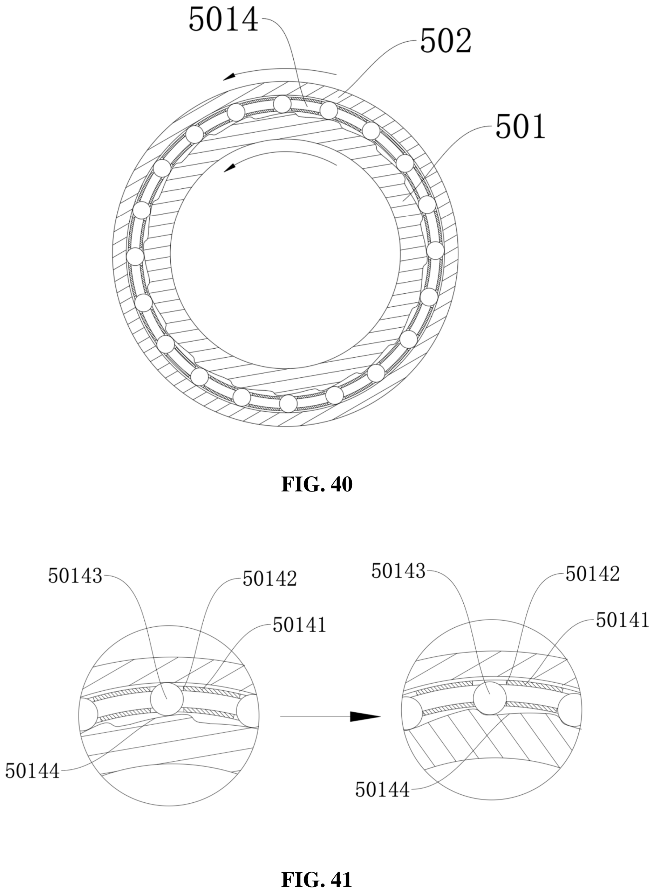

A first clutch structure 5014 is provided at the leftmost end of the first transmission member 501. The bottom surface of the first clutch structure 5014 is connected to the outer circumferential surface of the first transmission member 501, and the top surface of the first clutch structure 5014 is connected to the inner circumferential surface of the second transmission member 502. FIG. 40 shows schematically the first clutch structure. FIG. 41 shows schematically the first clutch structure 5014 in two states. The first clutch structure 5014 includes a cage 50141, rollers 50143, and a working surface 50144 that achieves the clutch function. In the section view, the diameter of the cage 50141 is larger than the diameter of the outer circumferential surface of the first transmission member 501 and smaller than the diameter of the inner circumferential surface of the second transmission member 502. The cage 50141 has a two-layer structure and is provided with multiple roller position-limiting slots 50142. The width of the roller position-limiting slots 50142 is slightly smaller than the diameter of the rollers 50143. The rollers 50143 are mounted in the roller position-limiting slots 50142 and can only rotate around their own axes. The rollers 50143 may be cylindrical rollers 50143, balls, or the like. In this embodiment, the cylindrical rollers 50143 are adopted.

The working surface 50144 of the first clutch structure 5014 may be either provided on a separate component which is then assembled onto the first transmission member 501 or directly provided on the outer circumferential surface of the first transmission member 501. In this embodiment, the working surface 50144 of the first clutch structure 5014 is directly provided on the outer circumferential surface of the first transmission member 501 in the section view. The working surface 50144 includes multiple arc surfaces connected end to end. The arc surface is lower in height at the left end than at the right end, forming a height difference. After the rollers 50143 are mounted in the cage 50141, the rollers 50143 can roll on their respective working surfaces 50144. The diameter of the rollers 50143 is larger than the minimum distance from the working surface 50144 to the inner circumferential surface of the second transmission member 502 in the section view. Therefore, the rollers 50143 can only roll on their respective working surfaces 50144 and will not move onto adjacent working surfaces.

When the first transmission member 501 and the second transmission member 502 rotate counterclockwise simultaneously and the rotational speed of the first transmission member 501 is higher than that of the second transmission member 502, the rollers 50143 move to the high points of the working surface 50144, so that the rollers 50143 are engaged between the outer circumferential surface of the first transmission member 501 and the inner circumferential surface of the second transmission member 502. The torque of the first transmission member 501 may be transmitted to the second transmission member 502 via the first clutch structure 5014.

When the first transmission member 501 and the second transmission member 502 rotate counterclockwise simultaneously and the rotational speed of the first transmission member 501 is lower than that of the second transmission member 502, the rollers 50143 move to the low points of the working surface 50144, and are disengaged from the outer circumferential surface of the second transmission member 502. At this time, the torque of the first transmission member 501 is not transmitted to the second transmission member 502 via the rollers 50143.

The distance from the high point to the low point of the working surface 50144 is extremely small, only a few tenths of a millimeter. Thus, whenever the rotational speed of the first transmission member 501 exceeds that of the second transmission member 502, the first transmission member 501, the rollers 50143, and the second transmission member 502 can be engaged within a minimal period of time, and can achieve the power transmission very rapidly. This effectively shortens the idle time of gear shifting, making the gear shifting process smoother.

By providing the first clutch structure 5014 between the first transmission member 501 and the second transmission member 502, the torque may be selectively transmitted from one of the first transmission member 501 (planet carrier) and the second transmission member 502 (ring gear) which rotates at a higher rotational speed, thereby changing the transmission ratio.

FIG. 39 shows a perspective view of the third transmission member 503. Second gear teeth 5031 are provided at the opening of the right end of the third transmission member 503. The second gear teeth 5031 of the third transmission member 503 are internally meshed with the tenth gear teeth 5092 of the second double planetary gear 509. A third clutch structure 5032 is provided at the left end of the third transmission member 503. A second clutch structure 5024 is provided at the leftmost end of the second transmission member 502. The bottom surface of the second clutch structure 5024 is connected to the outer circumferential surface of the second transmission member 502, and the top surface of the second clutch structure 5024 is connected to the inner circumferential surface of the third transmission member 503. The bottom surface of the third clutch structure 5032 is connected to the inner circumferential surface of the third transmission member 503, and the top surface of the third clutch structure 5032 is connected to the inner circumferential surface of the sleeve 510.

To make the transmission mechanism as compact as possible, the third clutch structure 5032 and the second clutch structure 5024 may be located in a same plane perpendicular to the axis of the spindle 4.

It should be noted that the first transmission member 501, the second transmission member 502, the third transmission member 503, and the sleeve 510 are typically made of steel materials, and the output member 1 is typically made of aluminum alloy materials. It is undesired to dispose the third clutch structure 5032 directly between the third transmission member 503 and the output member 1 because the rollers 50143 may impact the inner circumferential surface of the output member 1 and cause indentations. To avoid this issue, a steel sleeve 510 may be provided between the third transmission member 503 and the output member 1. Furthermore, to ensure a firm assembly between the sleeve 510 and the output member 1, the outer circumferential surface of the sleeve 510 is provided thereon with anti-slip slots. The anti-slip slots greatly increase the surface friction, so that the sleeve 510 can be assembled with the output member 1 more firmly and can be prevented from loosening from the output member 1. The anti-slip slots may be straight or oblique and may be formed by knurling tools.

The functions of the first clutch structure 5014, the second clutch structure 5024, and the third clutch structure 5032 are the same, which will not be repeated here.

In this manual-automatic integrated internal gear hub, the manipulation device of the manipulation mechanism 7 is driven by the driving mechanism 6 to rotate to different angles. For example, when the manipulation device is rotated from the first gear position angle 701 to the second gear position angle 702, the internal gear hub shifts up from the first gear to the second gear; when the manipulation device is rotated from the second gear position angle 702 to the first gear position angle 701, the internal gear hub shifts down from the second gear to the first gear. There are two driving modes for the driving mechanism 6: manual mode and automatic mode. To switch between the driving modes, the internal gear hub needs to be provided with a gear-shifting operation module 9. The gear-shifting operation module 9 is mounted on the handlebar of the bicycle, and the rider can control it by pressing with their fingers. The gear-shifting operation module 9 has a mode switching button, an upshift button, and a downshift button. The rider can switch between manual mode and automatic mode by pressing the mode switching button. In manual mode, the rider can upshift by pressing the upshift button and downshift by pressing the downshift button. In automatic mode, the rider does not need to perform any operations, and the internal gear hub executes gear shifting operations based on the vehicle speed. For example, when the vehicle speed reaches 10 kilometers per hour, it automatically shifts up from the first gear to the second gear. For example, when the vehicle speed drops below 10 kilometers per hour, it automatically shifts down from the second gear to the first gear. The rider can either switch to manual mode to freely change gears based on the actual road conditions, improving riding flexibility, or switch to automatic mode to automatically change gears, improving riding comfort.

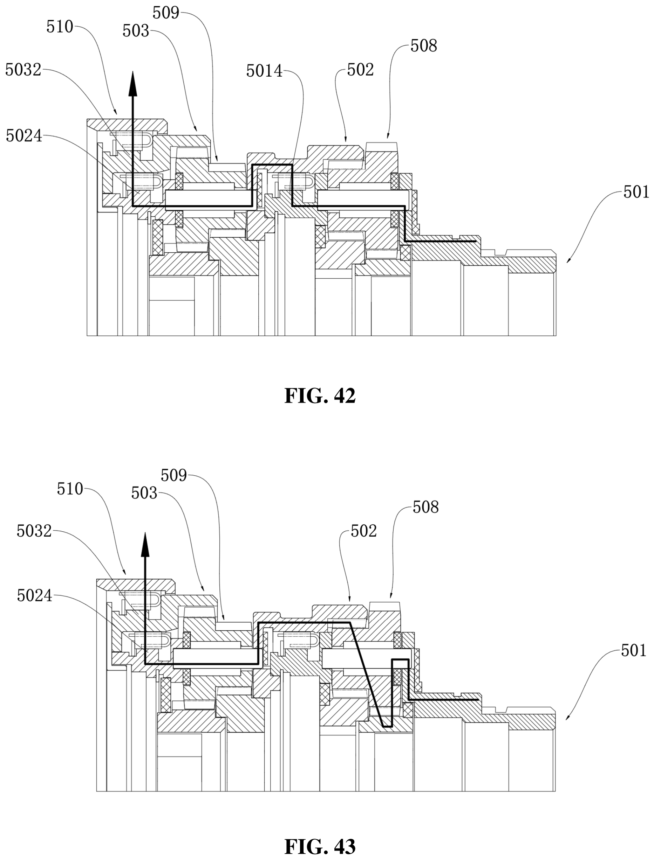

FIG. 42 shows the power transmission route of the first gear of the manual-automatic integrated internal gear hub.

Assume that the number of the first gear teeth 5021 is z1, the number of the second gear teeth 5031 is z2, the number of the third gear teeth 5041 is z3, the number of the fourth gear teeth 5051 is z4, the number of the fifth gear teeth 5061 is z5, the number of the sixth gear teeth 5071 is z6, the number of the seventh gear teeth 5081 is z7, the number of the eighth gear teeth 5082 is z8, the number of the ninth gear teeth 5091 is z9, and the number of the tenth gear teeth 5092 is z10.

In the first gear state, the first to fourth sun gears 504 to 507 are all in a free state. When torque is input from the input member 3, it is firstly transmitted to the first transmission member 501. The first transmission member 501 is rotated and then drives the first double planetary gear 508 to rotate. The first sun gear 504 and the second sun gear 505 idle. When the rotational speed of the first transmission member 501 is higher than that of the second transmission member 502, the first clutch structure 5014 is engaged to enable the first transmission member 501 and the second transmission member 502 to rotate synchronically, so that the torque of the first transmission member 501 is transmitted to the second transmission member 502. Similarly, the second transmission member 502 is rotated and then drives the second double planetary gear 509 to rotate. The third sun gear 506 and the fourth sun gear 507 idle. The second clutch structure 5024 and the third clutch structure 5032 are both engaged, transmitting the torque of the second transmission member 502 to the third transmission member 503 and then to the sleeve 510. The sleeve 510 is fastened to the output member 1, which then outputs the torque to the wheel. In this case, the internal gear hub does not undergo speed change through the two planetary gear mechanisms. This transmission ratio is defined as the first transmission ratio i1, where i1 = 1.

FIG. 43 shows the power transmission route of the second gear of this internal gear hub.

In the second gear state, the first sun gear 504 is locked, and the second to fourth sun gears 505 to 507 are all in a free state. When torque is input from the input member 3, it is firstly transmitted to the first transmission member 501. The first transmission member 501 is rotated and then drives the first double planetary gear 508 to rotate. The seventh gear teeth 5081 of the first double planetary gear 508 are externally meshed with the third gear teeth 5041 of the first sun gear 504. Based on the transmission principle of the planetary gear mechanism, when the sun gear is fixed, the planet carrier is the driving member, and the ring gear is the driven member, this constitutes an overdrive gear. Therefore, the rotational speed of the second transmission member 502 (driven member) is higher than that of the first transmission member 501 (driving member). At this time, the first clutch structure 5014 is disengaged and does not work. The rotation of the second transmission member 502 drives the second double planetary gear 509 to rotate. The third sun gear 506 and the fourth sun gear 507 idle. The second clutch structure 5024 and the third clutch structure 5032 are both engaged, transmitting the torque of the second transmission member 502 to the third transmission member 503 and then to the sleeve 510. The sleeve 510 is fastened to the output member 1, which then outputs the torque to the wheel. In this case, the transmission ratio of the internal gear hub is defined as the second transmission ratio i2, where i2 = 1/{1 + (z3 × z8)/(z1 × z7)}.

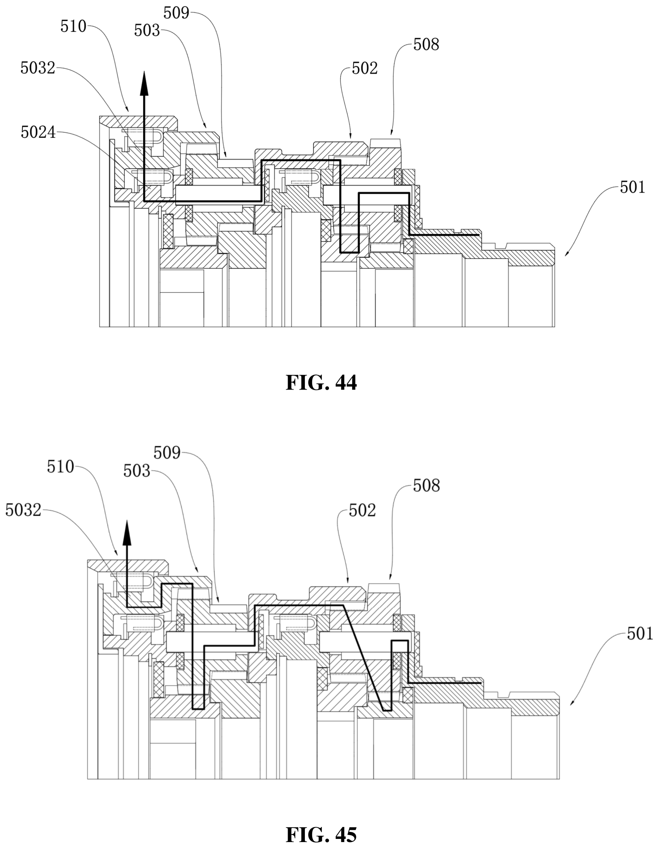

FIG. 44 shows the power transmission route of the third gear of this internal gear hub.

In the third gear state, the second sun gear 505 is locked, and the first, third and fourth sun gears 504, 506, and 507 are all in a free state. When torque is input from the input member 3, it is firstly transmitted to the first transmission member 501. The first transmission member 501 is rotated and then drives the first double planetary gear 508 to rotate. The eighth gear teeth 5082 of the first double planetary gear 508 are externally meshed with the fourth gear teeth 5051 of the second sun gear 505. Based on the transmission principle of the planetary gear mechanism, when the sun gear is fixed, the planet carrier is the driving member, and the ring gear is the driven member, this constitutes an overdrive gear. Therefore, the rotational speed of the second transmission member 502 (driven member) is higher than that of the first transmission member 501 (driving member). At this time, the first clutch structure 5014 is disengaged and does not work. The rotation of the second transmission member 502 drives the second double planetary gear 509 to rotate. The third sun gear 506 and the fourth sun gear 507 idle. The second clutch structure 5024 and the third clutch structure 5032 are both engaged, transmitting the torque of the second transmission member 502 to the third transmission member 503 and then to the sleeve 510. The sleeve 510 is fastened to the output member 1, which then outputs the torque to the wheel. In this case, the transmission ratio of the internal gear hub is defined as the third transmission ratio i3, where i3 = 1/{ 1 + z4/z1}.

FIG. 45 shows the power transmission route of the fourth gear of this internal gear hub.

In the fourth gear state, the first sun gear 504 and the fourth sun gear 507 are locked, whereas the second sun gear 505 and the third sun gear 506 are in a free state. When torque is input from the input member 3, it is firstly transmitted to the first transmission member 501. The first transmission member 501 is rotated and then drives the first double planetary gear 508 to rotate. The seventh gear teeth 5081 of the first double planetary gear 508 are externally meshed with the third gear teeth 5041 of the first sun gear 504. The rotational speed of the second transmission member 502 is higher than that of the first transmission member 501. At this time, the first clutch structure 5014 is disengaged and does not work. The rotation of the second transmission member 502 drives the second double planetary gear 509 to rotate. The tenth gear teeth 5092 of the second double planetary gear 509 are meshed with the sixth gear teeth of the fourth sun gear 507. Based on the transmission principle of the planetary gear mechanism, when the sun gear is fixed, the planet carrier is the driving element, and the ring gear is the driven element, this constitutes an overdrive gear. Therefore, the rotational speed of the third transmission member 503 (driven member) is higher than that of the second transmission member 502 (driving member). The second clutch structure 5024 is disengaged and does not work, whereas the third clutch structure 5032 is engaged. The torque is transmitted from the third transmission member 503 to the sleeve 510. The sleeve 510 is fastened to the output member 1, which then outputs the torque to the wheels. In this case, the transmission ratio of the internal gear hub is defined as the fourth transmission ratio i4, where i4 = 1/{(1 + z6/z2)} × i2.

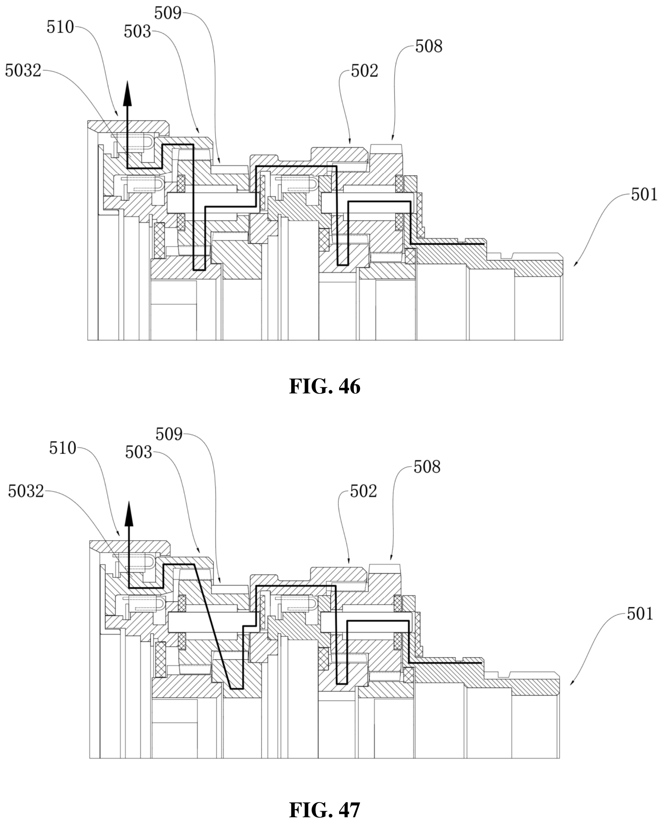

FIG. 46 shows the power transmission route of the fifth gear of this internal gear hub.

In the fifth gear state, the second sun gear 505 and the fourth sun gear 507 are locked, whereas the first sun gear 504 and the third sun gear 506 are in a free state. When torque is input from the input member 3, it is firstly transmitted to the first transmission member 501. The first transmission member 501 is rotated and then drives the first double planetary gear 508 to rotate. The eighth gear teeth 5082 of the first double planetary gear 508 are externally meshed with the fourth gear teeth 5051 of the second sun gear 505. The first clutch structure 5014 is disengaged and does not work. The second transmission member 502 is rotated and then drives the second double planetary gear 509 to rotate. The tenth gear teeth 5092 of the second double planetary gear 509 are meshed with the sixth gear teeth of the fourth sun gear 507. The second clutch structure 5024 is disengaged and does not work, whereas the third clutch structure 5032 is engaged. The torque is transmitted from the third transmission member 503 to the sleeve 510. The sleeve 510 is fastened to the output member 1, which then outputs the torque to the wheels. In this case, the transmission ratio of the internal gear hub is defined as the fifth transmission ratio i5, where i5 = 1/{(1 + z6/z2)} × i3.

FIG. 47 shows the power transmission route of the sixth gear of this internal gear hub.

In the sixth gear state, the second sun gear 505 and the third sun gear 506 are locked, whereas the first sun gear 504 and the fourth sun gear 507 are in a free state. When torque is input from the input member 3, it is firstly transmitted to the first transmission member 501. The first transmission member 501 is rotated and then drives the first double planetary gear 508 to rotate. The eighth gear teeth 5082 of the first double planetary gear 508 are externally meshed with the fourth gear teeth 5051 of the second sun gear 505. The first clutch structure 5014 is disengaged and does not work. The second transmission member 502 is rotated and then drives the second double planetary gear 509 to rotate. The ninth gear teeth 5091 of the second double planetary gear 509 are meshed with the fifth gear teeth of the third sun gear 506. The second clutch structure 5024 is disengaged and does not work, whereas the third clutch structure 5032 is engaged. The torque is transmitted from the third transmission member 503 to the sleeve 510. The sleeve 510 is fastened to the output member 1, which then outputs the torque to the wheels. In this case, the transmission ratio of the internal gear hub is defined as the sixth transmission ratio i6, where i6 = 1/{1 + (z5 × z10)/(z2 × z9)} × i3.

It can be seen that the first to sixth transmission ratios are all less than or equal to 1. The lower the gear, the larger the transmission ratio, the lower the rotational speed, and the greater the torque, making it suitable for climbing hills or carrying heavy loads. The higher the gear, the smaller the transmission ratio, the higher the rotational speed, and the smaller the torque, making it suitable for going downhill or carrying light loads. To enhance shifting smoothness, the number of the first gear teeth 5021 to the tenth gear teeth 5092 may be reasonably adjusted so that the first to sixth transmission ratios can be fitted into a binary linear equation.

The manual-automatic internal gear hub of the present application offers both manual and automatic shifting modes. In the manual shifting mode, riders can freely shift the gears based on actual road conditions, enhancing riding flexibility. In the automatic shifting mode, the gears are changed automatically based on the program, improving riding comfort. The shifting is achieved through the electrically driven manipulation mechanism 7. Compared with conventional cable-operated shifting, the electrically driven shifting method has no shifting resistance, provides a better feel, enables more precise gear changes, and requires no manual maintenance over long periods of operation.

Any reference in this specification to "an embodiment", "some embodiments", "exemplary embodiments", "an example", "a specific example", or "some examples", or the like means that specific features, structures, materials or characteristics described in connection with the embodiment or example is included in at least one embodiment or example of the present application. In the specification, the schematic expressions of the above terms do not necessarily refer to the same embodiment or example. Furthermore, the specific features, structures, materials or characteristics described may be combined in any one or more embodiments or examples in a suitable manner.

The above is only a preferred embodiment of the present application. It should be noted that various modifications and improvements, which could be made by those of ordinary skill in the art without departing from the concept of the present application, also belong to the protection scope of the present application.

## Claims

1. A manual-automatic integrated internal gear hub, comprising a spindle (4), a transmission mechanism (5), a driving mechanism (6), a manipulation mechanism (7), an input member (3), and an output member (1), wherein
the spindle (4) is fixed to a frame of a bicycle;
the driving mechanism (6), the manipulation mechanism (7), and the transmission mechanism (5) are sequentially connected and all mounted on the spindle (4);
the input member (3) is fixedly connected to the transmission mechanism (5) and is configured to input torque to the transmission mechanism (5);
the output member (1) is connected to the transmission mechanism (5) and is configured to output torque to a wheel of the bicycle;
the transmission mechanism (5) has at least one transmission ratio; and
the driving mechanism (6) is configured to rotate the manipulation mechanism (7) to a predetermined angle manually and/or automatically, such as to change transmission relationships among components of the transmission mechanism (5) and thus achieve a change in the transmission ratio of the transmission mechanism (5).

2. The manual-automatic integrated internal gear hub according to claim 1, wherein the driving mechanism (6) is electrically driven.

3. The manual-automatic integrated internal gear hub according to claim 1, wherein a buffer structure is connected between the driving mechanism (6) and the manipulation mechanism (7).

4. The manual-automatic integrated internal gear hub according to claim 3, wherein the buffer structure comprises a gear-shifting protective member (67) and an elastic element (68), with an end of the elastic element (68) being connected to the gear-shifting protective member (67), and the other end of the elastic element (68) being connected to the manipulation mechanism (7).

5. The manual-automatic integrated internal gear hub according to claim 1, wherein the driving mechanism (6) comprises a driving device (63), an output gear (65), and a gear-shifting actuating gear (66), wherein an output shaft of the driving device (63) is connected to the output gear (65), the output gear (65) is meshed with the gear-shifting actuating gear (66), and the gear-shifting actuating gear (66) is connected to the manipulation mechanism (7).

6. The manual-automatic integrated internal gear hub according to claim 1, wherein the driving mechanism (6) is provided with a gear position feedback module.

7. The manual-automatic integrated internal gear hub according to claim 6, wherein the gear position feedback module comprises a plurality of first Hall elements (642) arranged in a row, which sense magnetic field strength of a magnet mounted in a first magnet mounting slot (665) of a gear-shifting actuating gear (66) of the driving mechanism (6) to obtain pulse signals, thereby determining a gear position to which a driving device (63) of the driving mechanism (6) has rotated.

8. The manual-automatic integrated internal gear hub according to claim 6, wherein the gear position feedback module comprises a plurality of second Hall elements (643) arranged in a row, which sense magnetic field strength of a magnet mounted in a second magnet mounting slot (673) of a gear-shifting protective member (67) of the driving mechanism (6) to obtain pulse signals, thereby determining a current gear position of the internal gear hub.

9. The manual-automatic integrated internal gear hub according to claim 1, wherein the driving mechanism (6) is provided with a rotational speed feedback module.

10. The manual-automatic integrated internal gear hub according to claim 9, wherein the rotational speed feedback module comprises a third Hall element (644), which senses magnetic field strength of a magnet mounted in a third magnet mounting slot (21) of an end cover (2) connected to the output member (1) to obtain pulse signals, thereby calculating a rotational speed of the internal gear hub.

11. The manual-automatic integrated internal gear hub according to claim 1, wherein the driving mechanism (6) comprises a control box (61) and a sealing cover (62) connected to the control box (61), the control box (61) is configured to house a driving device (63) and a circuit board (64), the circuit board (64) is provided with a gear position feedback module, a rotational speed feedback module, and a controller (641), and wherein the driving device (63), the gear position feedback module, and the rotational speed feedback module are each electrically connected to the controller (641).

12. The manual-automatic integrated internal gear hub according to claim 1, wherein the manipulation mechanism (7) is provided with a pawl seat and a manipulation device, the pawl seat is provided on the spindle (4), the pawl seat is hinged with a pawl, the manipulation device is provided with an open slot, and the open slot is configured to control expansion or retraction of the pawl so as to change the transmission relationships among the components of the transmission mechanism (5).

13. The manual-automatic integrated internal gear hub according to claim 12, wherein a plurality of open slots are provided.

14. The manual-automatic integrated internal gear hub according to claim 12, wherein the open slot is provided between adjacent gear position angles.

15. The manual-automatic integrated internal gear hub according to claim 12, wherein the open slot is provided with a control surface for controlling the expansion or retraction of the pawl.

16. The manual-automatic integrated internal gear hub according to claim 15, wherein the control surface comprises a first control surface (7A) and a second control surface (7B), the first control surface (7A) is an arc surface and configured to control the retraction of the pawl, and the second control surface (7B) is an inclined surface and configured to control the expansion of the pawl.

17. The manual-automatic integrated internal gear hub according to claim 1, wherein the manipulation mechanism (7) is connected to the transmission mechanism (5) by inserting one into the other.

18. The manual-automatic integrated internal gear hub according to claim 17, wherein the manipulation mechanism (7) is provided with a third connecting portion (7111), the driving mechanism (6) is provided with a second connecting portion (676), and the third connecting portion (7111) of the manipulation mechanism (7) is connected to the second connecting portion (676) of the transmission mechanism (5) by inserting one into the other.

19. The manual-automatic integrated internal gear hub according to claim 12, wherein the manipulation mechanism (7) comprises a first manipulation device (71), a second manipulation device (72), and a third manipulation device (73), wherein the first manipulation device (71) comprises a first end (711) and a second end (713), which are connected by a connecting rod (712), and wherein the first manipulation device (71), the second manipulation device (72), and the third manipulation device (73) are each provided on the connecting rod (712).

20. The manual-automatic integrated internal gear hub according to claim 1, wherein the transmission mechanism (5) is provided with at least two stages of planetary gear mechanisms and at least one clutch structure, and the driving mechanism (6) is configured to enable torque to be output to the output member (1) selectively through the clutch structure after being shifted by the planetary gear mechanisms by changing the transmission relationships of the planetary gear mechanisms manually and/or automatically.

21. The manual-automatic integrated internal gear hub according to claim 20, wherein two stages of the planetary gear mechanisms are provided, namely a first-stage planetary gear mechanism and a second-stage planetary gear mechanism, which are connected in series for power transmission.

22. The manual-automatic integrated internal gear hub according to claim 21, wherein the first-stage planetary gear mechanism comprises a first sun gear (504), a second sun gear (505), a first double planetary gear (508), a first transmission member (501), and a second transmission member (502), wherein the first double planetary gear (508) is rotatably connected to the first transmission member (501), the second transmission member (502) has first gear teeth (5021), the first double planetary gear (508) has seventh gear teeth (5081) and eighth gear teeth (5082), the first sun gear (504) has third gear teeth (5041), and the second sun gear (505) has fourth gear teeth (5051), the third gear teeth (5041) of the first sun gear (504) are externally meshed with the seventh gear teeth (5081) of the first double planetary gear (508), the fourth gear teeth (5051) of the second sun gear (505) are externally meshed with the eighth gear teeth (5082) of the first double planetary gear (508), and the first gear teeth (5021) of the second transmission member (502) are internally meshed with the eighth gear teeth (5082) of the first double planetary gear (508).

23. The manual-automatic integrated internal gear hub according to claim 22, wherein a first clutch structure (5014) is provided between the first transmission member (501) and the second transmission member (502).

24. The manual-automatic integrated internal gear hub according to claim 21, wherein the second-stage planetary gear mechanism comprises a third sun gear (506), a fourth sun gear (507), a second double planetary gear (509), a second transmission member (502), and a third transmission member (503), wherein the second double planetary gear (509) is rotatably connected to the second transmission member (502), the third transmission member (503) has second gear teeth (5031), the second double planetary gear (509) has ninth gear teeth (5091) and tenth gear teeth (5092), the third sun gear (506) has fifth gear teeth (5061), the fourth sun gear (507) has sixth gear teeth (5071), the fifth gear teeth (5061) of the third sun gear (506) are externally meshed with the ninth gear teeth (5091) of the second double planetary gear (509), the sixth gear teeth (5071) of the fourth sun gear (507) are externally meshed with the tenth gear teeth (5092) of the second double planetary gear (509), and the second gear teeth (5031) of the third transmission member (503) are internally meshed with the tenth gear teeth (5092) of the second double planetary gear (509).

25. The manual-automatic integrated internal gear hub according to claim 24, wherein a second clutch structure (5024) is provided between the second transmission member (502) and the third transmission member (503).

26. The manual-automatic integrated internal gear hub according to claim 25, further comprising a sleeve (510) which is connected to the output member (1), wherein a third clutch structure (5032) is provided between the sleeve (510) and the third transmission member (503).

27. The manual-automatic integrated internal gear hub according to claim 26, wherein the third clutch structure (5032) and the second clutch structure (5024) are located in a same plane perpendicular to an axis of the spindle (4).

28. The manual-automatic integrated internal gear hub according to claim 26, wherein anti-slip slots are provided on an outer circumferential surface of the sleeve (510).

29. A bicycle, comprising the manual-automatic integrated internal gear hub according to any one of claims 1 to 28.
